# EUROPEAN PATENT SPECIFICATION

(11) **EP 2 245 132 B1**
(45) Date of publication and mention of the grant of the patent: **18.10.2017**
(21) Application number: 09713165.0
(22) Date of filing: 16.01.2009
(51) Int. Cl.: C11D 17/00, C11D 3/22, C11D 3/37, C11D 3/50, C08F 8/00, C08F 8/30, C08F 8/34, C08F 8/28

(54) **ENCAPSULATED BENEFIT AGENT**
VERKAPSELTER PFLEGESTOFF
AGENT BÉNÉFIQUE ENCAPSULÉ

(30) Priority: 21.02.2008 GB 0803165
(43) Date of publication of application: 03.11.2010
(73) Proprietor: Unilever PLC, A Company Registered in England and Wales under Company no. 41424, London EC4Y 0DY Greater London (GB); Unilever N.V., 3013 AL Rotterdam (NL)
(72) Inventor: JONES, Christopher, Clarkson, Wirral Merseyside CH63 3JW (GB); JONES, Craig, Warren, Wirral Merseyside CH63 3JW (GB); PAN, Xiaoyun, Shanghai 200233 (CN); WANG, Jinfang, Shanghai 200233 (CN); YUAN, Caigen, Shanghai 200233 (CN)
(74) Representative: James, Helen Sarah
(86) International application number: PCT/EP2009/050481
(87) International publication number: WO 2009/103576

(56) References cited:
- EP-A- 0 266 796
- EP-A2- 0 368 831
- WO-A-00/46337
- WO-A-03/068852
- WO-A-2006/132729
- BE-A- 569 823
- US-A- 6 107 401
- US-A1- 2002 103 095
- FUMIAN L., WANG L.,FENG X.: "Polyionic complexes derived from polyvinyl alcohol" POLYMER COMMUNICATIONS, vol. 4, 25 August 1985 (1985-08-25), pages 382-389, XP002534243

## Description

### Field of the Invention

The present invention relates to particles comprising a benefit agent, particularly one or more perfume components and their uses in both, the formulation of laundry detergent compositions and delivery of the benefit agent to fabric during laundering/washing. Compositions containing particles according to the invention provide deposition efficiency benefits without certain negatives associated with known compositions. The invention will be described with particular reference to perfumes and their incorporation in laundry formulations, such as laundry detergent compositions intended for fabric washing.

### Background and Prior Art

Perfumes are important and expensive components of laundry detergent compositions. It is important to ensure that perfumes are not lost during processing or on storage of the compositions and that they deposit onto articles being washed. Being volatile, perfumes are prone to evaporate from a composition, especially if the composition is subjected to elevated temperatures. Methods for deposition of perfume components and other benefit agents from laundry compositions are diverse and perfume is often incorporated into a carrier or other delivery system. Carrier systems for perfumes are typically based on encapsulation or entrapment of the perfume within a matrix. The perfume may simply be emulsified but deposition onto a substrate, such as fabric, is often inefficient and problems with poor retention or stability may be found. Preparation of materials by diffusion of the perfume into a carrier can suffer from complex preparation, long times of diffusion, poor retention of the perfume in the matrix and subsequent poor substrate deposition.

Surfactants are characteristically very efficient at combining with oily materials such as perfumes and removing them. Therefore deposition onto a surface and longevity of adherence of the perfume in a surfactant containing environment, is inherently poor. This results in any deposited perfume being washed off during a main wash, or in the perfume being leached from its carrier in the wash liquor and becoming unavailable for deposition onto the fabric. Perfume encapsulates have been proposed as a means of overcoming these problems and include those described in:
US 2003-215417; US 2003-216488; US 2003-158344;
US 2003-165692; US 2004-071742; US 2004-071746;
US 2004-072719; US 2004-072720; EP 1393706; US 2003-203829;
US 2003-195133; US 2004-087477; US 2004-0106536; US 6645479;
US 6200949; US 4882220; US 4917920; US 4514461 and
US 4234627.

Our co-pending application GB 0710369.0 is concerned with a process for the manufacture of core/shell perfume particles which particles further comprise a non-ionic deposition aid. By changing the materials present during the polymerisation process it is possible to ensure that the non-ionic deposition aid is predominantly attached to the outer surface of the particles. Typically the shell comprise an inner layer of melamine/urea-formaldehyde formed by polymerisation of melamine/urea (or mixtures thereof) and formaldehyde monomers, and an outer layer formed from ethylenically-unsaturated monomers, particularly vinyl acetate and methyl acrylate.

It is known to prepare water soluble packages in the detergent and agrochemical industries and these generally comprise either vertical form-fill-seal (VFFS) envelopes or thermoformed envelopes. In one of the VFFS processes, a roll of water soluble film is sealed along its edges to form a tube, which tube is heat sealed intermittently along its length to form individual envelopes which are filled with product and heat sealed. The thermoforming process generally involves moulding a first sheet of water soluble film to form one or more recesses adapted to retain a composition, such as for example a solid agrochemical composition, placing the composition in the at least one recess, placing a second sheet of water soluble material over the first so as to cover the or each recess, and heat sealing the first and second sheets together at least around the recesses so as to form one or more water soluble packages. Many types of water soluble packages are known, including packages made from polyvinyl alcohol (hereinafter referred to as "PVOH") film.

EP-A-518689 discloses a containerisation system for hazardous materials (for example pesticides) comprising a PVOH film enclosing a composition comprising the hazardous material, water, an electrolyte and optional other materials. The electrolyte is added to reduce the solubility of the film to prevent its dissolution by the packaged composition. EP-B-389513 discloses concentrated aqueous syrups (mainly foodstuffs but other materials such as detergents are mentioned) inside PVOH packages, the concentration of the syrup being effective to prevent dissolution of the package by the packaged composition. EP-A-700989 discloses a unit packaged detergent for dish washing, the package comprising a detergent composition wrapped in PVOH film, wherein the film protects the detergent from dissolution until the main wash cycle of the dish washing machine.

Films with modified PVOH are also known. WO-A1-97/19961 discloses fast solubility polymers, made from PVOH co-polymerized with carboxylate moieties, and have some degree of lactonization. These materials dissolve quickly in detergent solution. EP0284334 relates to films comprising a blend of PVOH and alkyl celluloses with a metal salt, such as borate, to produce a triggered pouch. The alkyl cellulose is present to respond to temperature such that at low rinse temperatures it is more soluble than at the higher temperatures associated with the wash cycle. The borate cross linking provides pH sensitivity. This document discloses that anionic surfactants have very little effect on or even increase the rate of dissolution of the film.

Our prior patent application PCT/EP2003/010354 discloses modified PVOH films with a preferred average thickness of from 50 to 500 microns, used to make capsules. The capsules preferably contain from 0,5 ml to 100 ml of a material such as a laundry conditioner.

WO 00/46337: discloses cross-linked anionic **alginate** gums being used as encapsulants. These are stabilised by divalent calcium ions (known to further cross-link the alginate). Alginate is made up of mannuronic and guluronic acids.

WO 03/068852: discloses polymers whose solubility in water is triggered by changes in surfactant concentration. One suggested use is the encapsulation of fragrance in laundry liquids where the polymer is stabilised by the surfactant present. The polymers are preferably formed from acrylic or vinylic monomers and comprise a protonated amine substituent.

EP 0266796: discloses polyvinyl alcohol polymers which are stable in concentrated laundry detergents and which can contain perfume or other benefit agents as a core material.

WO 2006/132729: discloses water-soluble copolymers of PvOH and specified sulphonated materials useful for packaging detergent products and encapsulating detergent components such as enzymes. In the case of the enzymes, solutions of the polymers may be sprayed or misted onto enzyme particles to provide a polymeric coating encapsulating the particles. It is know that the solubility of the films is influenced by the degree of hydrolysis (fully hydrolysed PvOH is much less soluble) and the presence of cross-linking agents such as borates which are used to stabilize enzymes or perborates which are used as laundry bleaches, This prior art document deals with the technical problem of how to package detergent/encapsulate materials which may contain these boron compounds such that they are released when immersed in water filling a washing machine.

US 2002/0103095: discloses PvOH modified with derivatising groups modified by reaction with hydrophilic entities such as acids, amines or thiols to substitute (e.g. carboxylate the PvOH).

### Brief Description of the Invention

We have now determined that modified PVOH can be usefully used to coat much smaller particles which comprise a benefit agent.
Accordingly the present invention provides a liquid fabric treatment composition comprising either an anionic detersive surfactant or a cationic surfactant which is a conditioning agent softening active and a particle having a diameter of less than 2 mm comprising a benefit agent and a water soluble polymeric film-forming materia, being PVOH, modified with a first charged, derivatising group(s) whereby the film remains substantially intact in the presence of a surfactant, and disintegrates when the concentration of the surfactant reduces sufficiently thereby releasing the benefit agent.
Preferably, the particles have a diameter less than 1 mm, more preferably less than 100 microns, more preferably less than 50 microns. Particles of this small size are less visible. The minimum particle size can be as low as 100 nm, however at low particle sizes the payload/shell ratio becomes less advantageous.

Without wishing to be bound by theory it is believed that the particles comprise a central core of the benefit agent which is surrounded by a shell of the polymer. It is believed that the presence of the charged group facilitates the formation of complexes with surfactants of opposing charge. In the presence of surfactant the shell forms a complex with the surfactant. By protecting a benefit agent with a hydrophobic film in this way it is possible to prevent or retard losses and/or degradation of the benefit agent under circumstances, such as storage, when the surfactant concentration is high. Upon dilution to a lower ambient surfactant concentration the complex breaks down and the benefit agent is released.

In a particularly preferred embodiment of the invention, the polymer is modified with a second, hydrophobic, derivatising group which is derived from a parent material having a ClogP of greater than 0.5. The water soluble film-forming material is a polyvinylalcohol (PVOH). Preferably the second derivatising group comprises a C4 to C22 hydrocarbyl chain. Preferably the parent material from which the first derivatising group is obtained is an acetal or aldehyde. The polymers per se comprise a further aspect of the present invention. Described herein is a process for treating fabrics comprising the steps of adding to a washing machine the particle of the present invention and contacting the particle with fabric in the drum of the washing machine. In this process, it is preferred that the tendency of the film to break-down is reduced in the presence of a fabric surfactant active whether this is a wash active such as an anionic surfactant, or a conditioning/softening active such as a cationic surfactant.

The actual concentration of detergent which inhibits the break-down of the film will depend on the use to which the particles are being put. If the particles are intended to protect the benefit agent during storage of the detergent and it is desired that the benefit agent should be released in the early part of a wash then the breakdown concentration should be selected such that the particles are stable in a neat detergent composition (where the surfactant concentration is typically over 100g/L) but breakdown in the diluted conditions in the wash, where the surfactant concentration is typically below 1g/L. If the intention is that the particles should survive the wash and release the benefit agent in the rinse (where the surfactant concentration is typically below 0.2g/L), then the breakdown concentration should be selected such that the particles are stable in the wash, but become unstable in the rinse.

### Detailed Description of the Invention

In order that the invention can be further understood it is described below with particular reference to the preferred features of specific elements of the invention.

### Polymer:

The film-forming polymer used in the invention is a poly vinyl alcohol. Described herein is a film-forming polymer material whose dissolution/dispersion in a liquor is dependent upon the concentration of any surfactant present in the liquor, such that the lower the concentration of surfactant in the liquor, the faster the film breaks down.

Without wishing to be bound by theory it is believed that the charged derivative within the poly vinyl alcohol polymer interacts with surfactants to form a gelled network during the duration of the wash cycle which renders the polymer substantially insoluble, but which breaks down at low concentrations of surfactant so that the polymer becomes substantially more soluble or dispersible. In the context of the present invention, "water soluble polymer" is defined as a material having a solubility in water at 20°C of more than 0.1g/litre, preferably more than 0.3g/litre, most preferably more than 0.5g/litre.

Preferably the modified poly vinyl alcohol polymer is stable at 20°C in water which contains a concentration of one of anionic/non-ionic or cationic surfactant of greater than 1 g/L. It should be appreciated that a polymer which is rendered insoluble by the presence of anionic surfactant (in combination with nonionic or not) will not generally be rendered insoluble by a cationic surfactant.

Preferred polymers from which the backbone of the derivatised polymeric film of the invention is formed include water-soluble resins such as PVOH. Generally, preferred water-soluble, PVOH-based film-forming polymers should have relatively low average molecular weight and high degrees of hydrolysis. Polyvinyl alcohol-based polymers preferred for use herein have an average molecular weight of from 1,000 to 300,000, preferably from 2,000 to 100,000, most preferably from 2,000 to 75,000. Hydrolysis, or alcoholysis, is defined as the percent completion of the reaction where the carboxy (particularly acetate) groups on the resin are substituted with hydroxyl groups. A degree of hydrolysis of from 60-99% of PVOH-based film-forming resin is preferred, while a more preferred degree of hydrolysis is from 88-99%. As used in this application, the term "PVOH" includes polyvinyl acetate compounds with degrees of hydrolysis disclosed herein. Preferred PVOH polymers preferably have a viscosity as a 7% solution within the range 100 to 5000 mPa.s at ambient temperature measured at a shear rate of 20s⁻¹.

All of the above polymers include the aforementioned polymer classes whether as single polymers or as copolymers formed of monomer units or as copolymers formed of monomer units derived from the specified class or as copolymers wherein those monomer units are copolymerised with one or more comonomer units.

### First charged derivitising group:

The first charged derivatising material is preferably present in the polymer at a level of from at least 0.1% by weight up to as much as possible by weight, based on the total weight of the polymer. It is believed that where higher levels of this derivatising group are present in the polymer, the polymer will exhibit a stronger interaction with surfactant and be more effectively stabilised by the surfactant. Thus, the sensitivity of the film to the ambient surfactant concentration may be set by a suitable selection of the type and level of derivatisation.

In one embodiment of the invention, cation-forming groups, such as amines may be included as a first derivatising group. It is believed that this makes the polymer more soluble in response to, for instance, the change in pH and/or ionic strength from the wash liquor to the rinse liquor. In another embodiment of the invention anion-forming groups such as sulphonates may be present. These are believed to make the capsules more suitable for use in a fabric softening/conditioning composition which comprises a cationic surfactant.

The hydrocarbyl chain length of the original function on the parent material from which the first charged derivatising group is obtained is preferably from 4 to 22, more preferably from 5 to 20. In this context, the number of carbons in the hydrocarbyl group includes any carbon within the chain attached to any other functional group within the derivatising material. For instance, butyraldehyde, which is a suitable parent for a derivatising group, has a hydrocarbyl chain length of 4. The derivatising groups are derived from acetals and aldehydes. Details of suitable derivatising groups are given below, with examples including 4-aminobutyraldehyde dimethyl acetal as a cationic derivatising group and 2-benzaldehyde sulphonic acid as a anionic derivatising group.

The first charged derivatising material is preferably present in the polymer such that the modification degree (as determined from the ¹H spectra) is from 0.1 to 40%, more preferably 2 to 30%, most preferably 5 to 25%, e.g. 8 to 15%. The first derivatising material is preferably present at a level such that the number ratio of the derivative groups to the free hydroxyl pairs on the backbone is from 1:1 to 1:30, more preferably 1:2 to 1:20, most preferably 1:7 to 1:15, e.g. 1:8 to 1:13. Below a ratio of 1:30 the properties of modified PVOH is similar to that of raw PVOH. Above a ratio of 1:3 synthesis can be impractical as unreacted derivatising reagents will generally be present in the reaction product mixture.

### Second hydrophobic derivatising group:

Preferably, the second hydrophobic derivatising group attached to the backbone of the polymer is selected from a parent material having a ClogP of from 0.5 to 6, more preferably from 1 to 6, most preferably from 2 to 6, e.g. 3 to 6.

In the context of the present invention, ClogP is calculated using the method are given in: Ghose, Viswanadhan and Wendoloski, Prediction of Hydrophobic (Lipophilic) Properties of Small Organic Molecules Using Fragment Methods: An Analysis of AlogP and CLogP Methods. J. Phys. Chem. A, 1998, 102, 3762-3772. This method is implemented within the software: "Pipeline Pilot", available from SciTegic, a wholly owned subsidiary of Accelrys, Inc.

Preferred second hydrophobic derivatising groups include those based on parent groups selected from acetals, ketals, esters, fluorinated organic compounds, ethers, alkanes, alkenes, aromatics. Especially preferred parent groups are aldehydes such as:
butyraldehyde,
octyl aldehyde,
dodecyl aldehyde,
2-ethyl hexanal,
cyclohexane carboxy-aldehyde,
citral,
propionaldehyde,
(2-methoxyethoxy) acetaldehyde dimethylacetal,
benzaldehyde,
although it will be readily apparent to the person skilled in the art that other suitable parent groups having the requisite ClogP are also suitable for use in the invention.

According to a preferred aspect of the invention, the hydrocarbyl chain length of the derivatising group attached to the polymeric backbone is from 4 to 20, even more preferably from 4 to 15, most preferably from 4 to 10, e.g. from 4 to 8. Hydrocarbyl chain lengths greater than 22 are undesirable as the parent material from which the derivatising group is obtained reacts poorly or not at all with the polymeric backbone. Hydrocarbyl groups shorter than 4 provide negligible additional hydrophobicity.

A particularly preferred polymer for use in the present invention is represented by the formula: 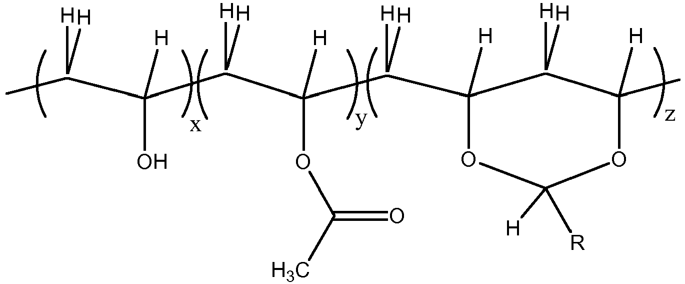 wherein the average number ratio of z to x is within the range of from 1:200 to 1:6, more preferably from 1:100 to 1:8, most preferably from 1:50 to 1:12, e.g. 1:30 to 1:14, y is the residual acetate remaining from the hydrolysis of the parent compound, which is preferably in the range of from 1-20 %, more preferably 1-10 %, most preferably 1-5 % and R is a charged or hydrophobic derivatising group preferably derived from alkyl or alkenyl group having from 3 to 22 carbon atoms.

Where R provides the charged group it is preferably derived from either 2-benzaldehyde sulphonic acid (for a negative charge) or 4-aminobutyraldehyde dimethyl acetal (for a positive charge). Further derivatising species are described below.

Where R provides the hydrophobic group it is preferably derived one or more of:
butyraldehyde,
octyl aldehyde,
dodecyl aldehyde,
2-ethyl hexanal,
cyclohexane carboxy-aldehyde,
citral,
propionaldehyde,
(2-methoxyethoxy) acetaldehyde dimethylacetal, or benzaldehyde.

### Anionic Modifications:

Anionic modification of the polymer backbone can be used to prepare surfactant-responsive materials for encapsulation of benefit agents, for example perfume, in a fabric conditioner.

As noted above aldehydes are preferred, alternative anionic modification agents include:
2-benzaldehyde sulphonic acid,
(4-nitrobenzyloxy)benzaldehyde,
2-carboxybenzaldehyde,
4-nitrocinnamaldehyde,
2-nitrobenzaldehyde,
4-chloro-3-nitrobenzaldehyde,
3-nitrobenzaldehyde,
2-hydroxy-3-methoxy-5-nitrobenzaldehyde,
6-nitroveratraldehyde,
4-carboxybenzaldehyde,
2,4-dinitrobenzaldehyde,
4-methoxy-3-nitrobenzaldehyde,
4-hydroxy-3-nitrobenzaldehyde,
5-nitro-2-furaldehyde diacetate,
3,5-dinitrosalicylaldehyde,
3-carboxybenzaldehyde,
3-nitro-4-(1-pyrrolidino)benzaldehyde,
2-hydroxy-3-nitrobenzaldehyde,
pyridine-2-carboxaldehyde 4-nitrophenylhydrazone,
1-(dimethylaminomethyl)cyclopentanecarboxaldehyde,
5-benzyloxyindole-3-carboxaldehyde,
5-n itroth iophene-2-carboxaldehyde,
3-bromo-2-hydroxy-5-nitrobenzaldehyde,
2-n itroth iophene-4-carboxaldehyde,
5-hydroxy-2-nitrobenzaldehyde,
4-methyl-3-n itrobenzaldehyde,
1-(2-nitrobenzyl)pyrrole-2-carboxaldehyde,
2-carboxy-3,4-dimethoxybenzaldehyde,
2-fluoro-5-nitrobenzaldehyde,
5-methoxy-1-methyl-4-nitroindole-3-carboxaldehyde,
5-fluoro-2-nitrobenzaldehyde.

The preferred additional modification reagent an aldehyde or an acetal, preferably 2-benzaldehyde sulphonic acid, sodium salt. This has an anionic group, which facilitates interaction with cationic surfactants such as are used in rinse conditioners. Moreover, the hydrophilic/hydrophobic properties of the final product can be tuned by adjusting the feed ratios and nature of the hydrophobic and the anionic derivatising agents.

The anionic derivatising material is preferably present in the polymer at a level of from 0.1 to 40% by weight, based on the total weight of the polymer, more preferably 2 to 30%, most preferably 5 to 25%. Where attempts are made to produce materials with higher levels of derivatisation, residues of the modification reagent may remain.

The anionic derivatising material is preferably present at a level such that the number ratio of the derivative groups to the free hydroxyl pairs on the backbone is from 1:2 to 1:30, more preferably 1:4 to 1:25, most preferably 1:7 to 1:20, e.g. 1:8 to 1:19.

### Cationic Modifications:

Cationic modification of the polymer backbone can be used to prepare surfactant-responsive materials for encapsulation of benefit agents, for example perfume, in a detergent composition which comprises anionic and/or non-ionic surfactants. These are referred to as "cation-derivatised/anionic complexed" particles.

Alternative cationic modification agents include: is
4-aminobutyraldehyde dimethyl acetal,
aminoacetaldehyde diethyl acetal,
anilinoacetaldehyde diethyl acetal,
N,N-dimethylformamide dimethyl acetal,
N-benzylaminoacetaldehyde diethyl acetal,
aminoacetaldehyde dimethyl acetal,
pyridine-4-carboxaldehyde,
1-methylpyrrole-2-carboxaldehyde,
pyridine-2-carboxaldehyde,
4-dimethylaminobenzaldehyde,
4-diethylaminobenzaldehyde,
pyrrole-2-carboxaldehyde,
2-chlorobenzaldehyde thiosemicarbazone,
pyridine-3-carboxaldehyde,
indole-3-carboxaldehyde,
3,5-dinitrosalicylaldehyde,
2-phenylindole-3-carboxaldehyde,
4-dimethylamino-cinnamaldehyde,
4-dimethylaminobutyraldehyde diethyl acetal,
5-chloroindole-3-carboxaldehyde,
indole-5-carboxaldehyde,
1-methylbenzimidazole-2-carboxaldehyde,
2-(2,2,2-trimethylacetamido)pyridine-3-carboxaldehyde,
2-amino-5-iodopyridine-3-carboxaldehyde,
3-aminopyridine-4-carboxaldehyde,
4-aminopyridine-3-carboxaldehyde,
4-amino-5-iodopyridine-3-carboxaldehyde,
2-chloro-4-iodopyridine-3-carboxaldehyde,
5-bromo-2-methoxypyridine-3-carboxaldehyde,
2-methoxypyridine-3-carboxaldehyde,
2-ethoxypyridine-3-carboxaldehyde,
2-isopropoxypyrid ine-3-carboxaldehyde,
2-(cyclopropylmethoxy) pyridine-3-carboxaldehyde,
2-chloropyridine-4-carboxaldehyde,
2-n-propoxypyridine-3-carboxaldehyde,
2-cyclopentyloxypyridine-3-carboxaldehyde,
2-(2,2,2-trifluoroethoxy)pyridine-3-carboxaldehyde,
6-(1-pyrrolidino)pyridine-3-carboxaldehyde,
6-(1-piperidino)pyridine-3-carboxaldehyde,
6-cyclopentyl-oxypyridine-3-carboxaldehyde,
6-cyclohexyloxypyridine-3-carboxaldehyde,
5-bromopyridine-2-carboxaldehyde,
2-(3-dimethylaminopropoxy)benzaldehyde,
1,3,5-trimethyl-1H-pyrazole-4-carbox-aldehyde,
5-benzyloxy-6-azaindole-3-carboxaldehyde,
3-(p-tolyl)-1H-pyrazole-4-carboxaldehyde,
N-methylaminoacetaldehyde dimethyl acetal, dimethylaminoacetaldehyde diethyl acetal,
4-Diethylaminosalicylaldehyde,
4-aminobutyraldehyde diethyl acetal,
2-amino-5-chlorobenzaldehyde,
2-bromopyridine-4-carboxaldehyde,
2-aminopyridine-3-carboxaldehyde,
4-dimethylaminobenzaldehyde

The preferred additional modification reagent is an acetal or an aldehyde, preferably 4-aminobutyraldehyde dimethyl acetal. This has a cationic group, which facilitates interaction with anionic surfactants such as are used in mainwash detergents. Moreover, the hydrophilic/hydrophobic properties of the final product can be tuned by adjusting the feed ratios and nature of the hydrophobic and the cationic derivatising agents.

The cationic derivatising material is preferably present in the polymer at a level of from 0.1 to 40% by weight, based on the total weight of the polymer, more preferably 2 to 30%, most preferably 3 to 25%.

The cationic derivatising material is preferably present at a level such that the number ratio of the derivative groups to the free hydroxyl pairs on the backbone is from 1:2 to 1:30, more preferably 1:4 to 1:28, most preferably 1:5 to 1:25, e.g. 1:6 to 1:24.

### Other film components:

It can be advantageous for the water soluble film to be provided as a cross-linked polymeric structure. The level of cross-linking should be kept low so as to avoid the formation of an insoluble material.

Particularly suitable cross-linking agents include formaldehyde; polyesters; epoxides; amidoamines; anhydrides; phenols; isocyanates; vinyl esters; urethanes; polyimides; arylics; bis(methacrylkoxypropyl) tetramethylsiloxane (styrenes, methylmethacrylates); n-diazopyruvates; phenyboronic acids; cis-platin; divinylbenzene; polyamides; dialdehydes; triallyl cyanurates; N-(-2-ethanesulfonylethyl)pyridinium halides; tetraalkyltitanates; mixtures of titanates and borates or zirconates; polyvalent ions of Cr, Zr, Ti; dialdehydes, diketones; alcohol complexes of organotitanates, zircoates and borates and copper (II) complexes. For PVOH-based films, the preferred cross-linking agent is a metalloid oxide such as borate, tellurate, arsenate, and precursors thereof. Other known cross-linkers include the vanadyl ion, titanium ion in the plus three valence state, or a permanganate ion (disclosed in patent US 3,518,242). Alternative cross-linkers are given in the book: Polyvinylalcohol - Properties and applications, Chapter 9 by C.A. Finch (John Wiley & Sons, New York, 1973).

The film may incorporate a plasticiser and/or crystallinity disruptor. It is to be understood that the term "plasticiser" and phrase "crystallinity disruptor" are interchangeable such that a reference to one is an implicit reference to the other.

Water itself is a suitable plasticiser for PVOH films but other common plasticisers include: Polyhydroxy compounds, e.g. glycerol, trimethylolpropane, diethylene glycol, triethylene glycol, sorbitol, dipropylene glycol, polyethylene glycol; starches, e.g. starch ether, esterificated starch, oxidized starch and starches from potato, tapioca and wheat; cellulosics/carbohydrates, e.g. amylopectin, dextrin carboxymethylcelluose and pectin.

Amines are particularly preferred plasticisers.

Suitable plasticisers for PVP-based films may be chosen from one or more of:
phosphates e.g. tris(2-ethylhexyl)phosphate, isopropyl diphenyl phosphate, tributoxyethylphosphate;
polyols e.g. glycerol, sorbitol, diethylene glycol diperlargonate, polyethylene glycol di-2-ethylhexanoate, dibutyl tartrate;
polyol esters e.g. hydroxy containing polycaprolactones, hydroxy containing poly-L-lactide;
lower phthalates e.g. dimethyl phthalate, diethyl phthalate, dibutyl pthalate; and sulfonamides e.g. toluene sulfonamide, N-ethyltoluene sulfonamide.

Suitable plasticisers for PEO-based films may be selected from one or more of:
phosphates e.g. tris(2-ethylhexyl)phosphate, isopropyl diphenyl phosphate, tributoxyethylphosphate;
polyols e.g. glycerol, sorbitol, diethylene glycol diperlargonate, polyethylene glycol di-2-ethylhexanoate, dibutyl tartrate;
lower phthalates e.g. dimethyl phthalate, diethyl phthalate, dibutyl pthalate;
and sulphonamides e.g. toluene sulphonamide, N-ethyltoluene sulphonamide.

### Encapsulating Surfactants:

The surfactant which is used to form the complex with the film will depend on whether the film is non-ionic, or modified with anionic or cationic groups. If the particle is intended for use in a laundry treatment composition the surfactant may be the same as that used in the laundry treatment composition or it may be different.

Suitable non-ionic surfactants are: ethoxylated alcohols, alkylphenol polyglycol ether, fatty acid alkylolamide, fatty alcohol polyethylene glycol ether, alkyl polyglycoside, extruded polyethylene. Mixtures of these surfactants can be used. Ethoxylated alcohols are particularly preferred non-ionic surfactants.

It is particularly preferred to use a charged surfactant species

Suitable anionic surfactants are: linear alkylbenzene sulphonate (LAS), primary alkyl sulphate (PAS), fatty ether sulphates (LES), secondary alkane sulfonate, α-olefine sulfonate, α-sulfonic fatty acid methyl ester, methyl ester sulphonates (MES). The preferred surfactants are LAS, PAS, LES, and mixtures thereof. Particularly preferred materials include sodium fatty alcohol sulphate, ammonium fatty alcohol sulphate, ammonium alcohol ether sulphate, sodium fatty ether sulphate, alcohol ether carboxylate and nonylphenol polyoxyethylene ether carboxylate. The most preferred surfactant is LAS.

Suitable cationic surfactants are water soluble cationic species having at least one alkyl or alkyenyl chain. It is preferable that the sum of the length of the alkyl chains is less than 20. Preferred cationic surfactants are: quaternary ammonium compounds having single long-chain aliphatic groups. Cetyl-trimethyl-ammonium chloride (CTAC) is particularly preferred.

### Benefit Agents:

The preferred benefit agents according to the present invention have a ClogP greater than 0.5. In the compositions and methods described herein, benefit agents are hydrophobic materials that can provide a positive or beneficial effect to the substrate e.g., to hair, skin, fabric, and teeth.

Preferred benefit agents include perfumes, lubricants any other oily materials. Particularly preferred benefit agents include, but not limited to, the following:
a) silicone oils, resins, and modifications thereof such as linear and cyclic polydimethylsiloxanes, amino-modified, allcyl, aryl, and alkylaryl silicone oils, which preferably have a viscosity of greater than 50,000 cst;
b) perfume components including fragrance, perfumery, and essential oils and resins, and pro-fragrance materials;
c) organic sunscreen actives, for example, octylmethoxy cinnamate;
d) antimicrobial agents, for example, 2-hydroxy-4,2,4- trichlorodiphenylether;
e) ester solvents; for example, isopropyl myristate;
f) lipids and lipid like substance, for example, cholesterol;
g) hydrocarbons such as paraffins, petrolatum, and mineral oil
h) fish and vegetable oils;
i) hydrophobic plant extracts;
j) waxes;
k) pigments including inorganic compounds with hydrophobically- modified surface and/ or dispersed in an oil or a hydrophobic liquid, and;
l) sugar-esters, such as sucrose polyester (SPE).

The most preferred benefit agents are the antimicrobials, lubricants (such as silicones, SPE's and hydrocarbons) and perfume components. Perfume components include both odiferous materials and pro-fragrance materials.

The pro-fragance can, for example, be a food lipid. Food lipids typically contain structural units with pronounced hydrophobicity. The majority of lipids are derived from fatty acids. In these 'acyl' lipids the fatty acids are predominantly present as esters and include mono-, di-, triacyl glycerols, phospholipids, glycolipids, diol lipids, waxes, sterol esters and tocopherols. In their natural state, plant lipids comprise antioxidants to prevent their oxidation. While these may be at least in part removed during the isolation of oils from plants some antioxidants may remain. These antioxidants can be pro-fragrances. In particular, the carotenoids and related compounds including vitamin A, retinol, retinal, retinoic acid and provitamin A are capable of being converted into fragrant species including the ionones, damascones and damscenones. Preferred pro-fragrance food lipids include olive oil, palm oil, canola oil, squalene, sunflower seed oil, wheat germ oil, almond oil, coconut oil, grape seed oil, rapeseed oil, castor oil, corn oil, cottonseed oil, safflower oil, groundnut oil, poppy seed oil, palm kernel oil, rice bran oil, sesame oil, soybean oil, pumpkin seed oil. jojoba oil and mustard seed oil. Perfume components which are odiferious materials are described in further detail below.

### Perfumes:

The perfume is typically present in an amount of from 10-85% by total weight of the particle, preferably from 20 to 75% by total weight of the particle. The perfume suitably has a molecular weight of from 50 to 500.

Useful components of the perfume include materials of both natural and synthetic origin. They include single compounds and mixtures. Specific examples of such components may be found in the current literature, e.g., in Fenaroli's Handbook of Flavor Ingredients, 1975, CRC Press; Synthetic Food Adjuncts, 1947 by M. B. Jacobs, edited by Van Nostrand; or Perfume and Flavor Chemicals by S. Arctander 1969, Montclair, N.J. (USA). These substances are well known to the person skilled in the art of perfuming, flavoring, and/or aromatizing consumer products, i.e., of imparting an odor and/or a flavor or taste to a consumer product traditionally perfumed or flavored, or of modifying the odor and/or taste of said consumer product.

By perfume in this context is not only meant a fully formulated product fragrance, but also selected components of that fragrance, particularly those which are prone to loss, such as the so-called 'top notes'.

Top notes are defined by Poucher (Journal of the Society of Cosmetic Chemists 6(2):80 [1955]). Examples of well known top-notes include citrus oils, linalool, linalyl acetate, lavender, dihydromyrcenol, rose oxide and cis-3-hexanol. Top notes typically comprise 15-25%wt of a perfume composition and in those embodiments of the invention which contain an increased level of top-notes it is envisaged at that least 20%wt would be present within the encapsulate.

Typical perfume components which it is advantageous to encapsulate, include those with a relatively low boiling point, preferably those with a boiling point of less than 300, preferably 100-250 Celsius.

It is also advantageous to encapsulate perfume components which have a low LogP (ie. those which will be partitioned into water), preferably with a LogP of less than 3.0. These materials, of relatively low boiling point and relatively low LogP have been called the "delayed blooming" perfume ingredients and include the following materials:
Allyl Caproate, Amyl Acetate, Amyl Propionate, Anisic Aldehyde, Anisole, Benzaldehyde, Benzyl Acetate, Benzyl Acetone, Benzyl Alcohol, Benzyl Formate, Benzyl Iso Valerate, Benzyl Propionate, Beta Gamma Hexenol, Camphor Gum, Laevo-Carvone, d-Carvone, Cinnamic Alcohol, Cinamyl Formate, Cis-Jasmone, cis-3-Hexenyl Acetate, Cuminic Alcohol, Cyclal C, Dimethyl Benzyl Carbinol, Dimethyl Benzyl Carbinol Acetate, Ethyl Acetate, Ethyl Aceto Acetate, Ethyl Amyl Ketone, Ethyl Benzoate, Ethyl Butyrate, Ethyl Hexyl Ketone, Ethyl Phenyl Acetate, Eucalyptol, Eugenol, Fenchyl Acetate, Flor Acetate (tricyclo Decenyl Acetate), Frutene (tricyclco Decenyl Propionate), Geraniol, Hexenol, Hexenyl Acetate, Hexyl Acetate, Hexyl Formate, Hydratropic Alcohol, Hydroxycitronellal, Indone, Isoamyl Alcohol, Iso Menthone, Isopulegyl Acetate, Isoquinolone, Ligustral, Linalool, Linalool Oxide, Linalyl Formate, Menthone, Menthyl Acetphenone, Methyl Amyl Ketone, Methyl Anthranilate, Methyl Benzoate, Methyl Benyl Acetate, Methyl Eugenol, Methyl Heptenone, Methyl Heptine Carbonate, Methyl Heptyl Ketone, Methyl Hexyl Ketone, Methyl Phenyl Carbinyl Acetate, Methyl Salicylate, Methyl-N-Methyl Anthranilate, Nerol, Octalactone, Octyl Alcohol, p-Cresol, p-Cresol Methyl Ether, p-Methoxy Acetophenone, p-Methyl Acetophenone, Phenoxy Ethanol, Phenyl Acetaldehyde, Phenyl Ethyl Acetate, Phenyl Ethyl Alcohol, Phenyl Ethyl Dimethyl Carbinol, Prenyl Acetate, Propyl Bornate, Pulegone, Rose Oxide, Safrole, 4-Terpinenol, Alpha-Terpinenol, and /or Viridine

It is commonplace for a plurality of perfume components to be present in a formulation. In the encapsulates of the present invention it is envisaged that there will be four or more, preferably five or more, more preferably six or more or even seven or more different perfume components from the list given of delayed blooming perfumes given above present in the encapsulated perfume.

Another group of perfumes with which the present invention can be applied are the so-called 'aromatherapy' materials. These include many components also used in perfumery, including components of essential oils such as Clary Sage, Eucalyptus, Geranium, Lavender, Mace Extract, Neroli, Nutmeg, Spearmint, Sweet Violet Leaf and Valerian. By means of the present invention these materials can be transferred to textile articles that will be worn or otherwise come into contact with the human body (such as handkerchiefs and bed linen).

### Manufacturing process:

The modification of the polymer can be accomplished by a range of known processes. For example in the manufacture of modified PVOH, an acidic solution of PVOH (preferably formed at a temperature of above 80 Celsius) is reacted at around 70 Celsius with an aldehyde/acetal (preferably added dropwise). After the addition of the components the reaction is allowed to proceed for several hours at STP.

The encapsulates of the present invention can be formed by mixing a solution of the modified polymer with the benefit agent under shear, followed by the addition of surfactant, again under shear.

### Use in Products:

The described particles may be employed in a broad range of products for cleaning and/or conditioning and the particular composition of the product will depend on the substrate being treated, for example, the hair, skin, fabric, teeth, fabrics and hard surfaces. Cleansing products such as the conditioning shampoo, body wash, liquid soap, laundry detergent, fabric conditioner, tooth paste, and counter cleaning products, characterized for having relatively high loadings of detersive surfactants, are some of the product forms that these compositions represent.

It is particularly preferred that the composition is a laundry detergent or a fabric conditioner, which are described in further detail below.

### Laundry Products:

The composition of the invention also contains one or more surfactants and other ingredients such that the composition is fully functional as a laundry cleaning and/or care composition. A composition of the invention is in liquid form. The composition may be a concentrate to be diluted, rehydrated and/or dissolved in a solvent, including water, before use. The composition may also be a ready-to-use (in-use) composition.

The present invention is suitable for use in industrial or domestic fabric wash compositions, fabric conditioning compositions and compositions for both washing and conditioning fabrics (so-called through the wash conditioner compositions). Other contemplated ingredients including surfactants, hydrotropes, preservatives, fillers, builders, complexing agents, stabilizers, other conventional detergent ingredients, or combinations of one or more thereof are discussed below. The composition may also contain other conventional detergent ingredients such as e.g. fabric conditioners including clays, foam boosters, suds suppressors (antifoams), anti-corrosion agents, anti-microbials, shading dye, photo-bleach, fluorescer or tarnish inhibitors. Fabric wash compositions according to the present are in liquid form. Fabric conditioning products *per se* are generally liquids.

As noted above, the surfactant which is used in the bulk of the product and that which is used to encapsulate the benefit agent may not be the same. This will particularly be the case with cationic based formulations as the cationic surfactants used in rinse conditioners tend to be of low solubility.

### Detersive Surfactants:

Fabric wash compositions according to the present invention comprise a fabric wash detergent material selected from non-soap anionic surfactant, nonionic surfactants, soap, amphoteric surfactants, zwitterionic surfactants and mixtures thereof. Detergent compositions suitable for use in domestic or industrial automatic fabric washing machines generally contain anionic non-soap surfactant or nonionic surfactant, or combinations of the two in suitable ratio, as will be known to the person skilled in the art, optionally together with soap. Many suitable detergent-active compounds are available and fully described in the literature, for example in "Surface-Active Agents and Detergents", Volumes I and II, by Schwartz, Perry & Berch. The surfactants are typically present in the composition at a level of from 0.1% to 60% by weight. Higher levels of surfactant may be employed (up to almost 100%) but this can leave little space in the formulation for builders and other components and may lead to a sticky product which requires special processing.

Suitable anionic detersive surfactants are well known to the person skilled in the art and include alkyl benzene sulphonate, primary and secondary alkyl sulphates, particularly C₈-C₁₅ primary alkyl sulphates; alkyl ether sulphates; olefin sulphonates; alkyl xylene sulphonates, dialkyl sulphosuccinates; ether carboxylates; isethionates; sarcosinates; fatty acid ester sulphonates and mixtures thereof. The sodium salts are generally preferred. When included therein the composition usually contains from about 1% to about 50%, preferably 10 wt%-40 wt% based on the fabric treatment composition of an anionic surfactant such as linear alkylbenzenesulfonate, alpha-olefinsulfonate, alkyl sulfate (fatty alcohol sulfate), alcohol ethoxysulfate, secondary alkanesulfonate, alpha-sulfo fatty acid methyl ester, alkyl- or alkenylsuccinic acid or soap. Preferred surfactants are alkyl ether sulphates and blends of alkoxylated alkyl nonionic surfactants with either alkyl sulphonates or alkyl ether sulphates. Many of these surfactants are also suitable for the preparation of the particles to which the present invention relates.

Preferred alkyl ether sulphates are C8-C15 alkyl and have 2-10 moles of ethoxlation. Preferred alkyl sulphates are alkylbenzene sulphonates, particularly linear alkylbenzene sulphonates having an alkyl chain length of C₈-C₁₅. The counter ion for anionic surfactants is typically sodium, although other counter-ions such as TEA or ammonium can be used. Suitable anionic surfactant materials are available in the marketplace as the 'Genapol'™ range from Clariant.

Nonionic surfactants are also well known to the person skilled in the art and include primary and secondary alcohol ethoxylates, especially C₈-C₂₀ aliphatic alcohol ethoxylated with an average of from 1 to 20 moles of ethylene oxide per mole of alcohol, and more especially the C₁₀-C₁₅ primary and secondary aliphatic alcohols ethoxylated with an average of from 1 to 10 moles of ethylene oxide per mole of alcohol. Non-ethoxylated nonionic surfactants include alkyl polyglycosides, glycerol monoethers and polyhydroxy amides (glucamide). Mixtures of nonionic surfactant may be used. When included therein the composition usually contains from about 0.2% to about 40%, preferably 1 to 20 wt%, more preferably 5 to 15 wt% of a non-ionic surfactant such as alcohol ethoxylate, nonylphenol ethoxylate, alkylpolyglycoside, alkyldimethylamineoxide, ethoxylated fatty acid monoethanolamide, fatty acid monoethanolamide, polyhydroxy alkyl fatty acid amide, or N-acyl N-alkyl derivatives of glucosamine ("glucamides").

Nonionic surfactants that may be used in laundry cleaning formulations include the primary and secondary alcohol ethoxylates, especially the C₈-C₂₀ aliphatic alcohols ethoxylated with an average of from 1 to 35 moles of ethylene oxide per mole of alcohol, and more especially the C₁₀-C₁₅ primary and secondary aliphatic alcohols ethoxylated with an average of from 1 to 10 moles of ethylene oxide per mole of alcohol.

Main wash compositions which comprise the cation-derivatised/anionic-complexed particles of the present invention will generally be used in the normal way, being dosed into water to form a surfactant containing wash liquor which is contacted with articles to be washed. After some time it is commonplace to separate the articles from the wash liquor and rinse the articles in surfactant-free water. Many particles will remain in contact with the articles being washed as they are filtered-out by articles. At that time the particles are thought to lose the anionic surfactant from the complex with the cationic polymer leading the film to disintegrate and release the contents of the particle. Ideally the delay of the release of the particle contents should be such that the main-wash surfactant has been removed prior the release of the benefit agent. This improves the delivery of the benefit agent as it is no longer removed by the surfactant.

### Cationic Fabric Softeners:

Suitable cationic fabric softening compounds for use in fabric softening compositions according to the invention are substantially water-insoluble quaternary ammonium materials comprising a single alkyl or alkenyl long chain having an average chain length greater than or equal to C20 or, more preferably, compounds comprising a polar head group and two alkyl or alkenyl chains having an average chain length greater than or equal to C14. Preferably the fabric softening compounds have two long chain alkyl or alkenyl chains each having an average chain length greater than or equal to C16. Most preferably at least 50% of the long chain alkyl or alkenyl groups have a chain length of C18 or above. It is preferred if the long chain alkyl or alkenyl groups of the fabric softening compound are predominantly linear.

Quaternary ammonium compounds having two long-chain aliphatic groups, for example, distearyldimethyl ammonium chloride and di(hardened tallow alkyl) dimethyl ammonium chloride, are widely used in commercially available rinse conditioner compositions. Other examples of these cationic compounds are to be found in "Surfactants Science Series" volume 34 ed. Richmond 1990, volume 37 ed. Rubingh 1991 and volume 53 eds. Cross and Singer 1994, Marcel Dekker Inc. New York".

Any of the conventional types of such compounds may be used in the compositions of the present invention.

The fabric softening compounds are preferably compounds that provide excellent softening, and are characterised by a chain melting Lβ to Lα transition temperature greater than 250°C, preferably greater than 350°C, most preferably greater than 450°C. This Lβ to Lα transition can be measured by differential scanning calorimetry as defined in "Handbook of Lipid Bilayers", D Marsh, CRC Press, Boca Raton, Florida, 1990 (pages 137 and 337).

Substantially water-insoluble fabric softening compounds are defined as fabric softening compounds having a solubility of less than 1 x 10⁻³ wt% in demineralised water at 20°C. Preferably the fabric softening compounds have a solubility of less than 1 x 10⁻⁴ wt%, more preferably from less than 1 x 10⁻⁸ to 1 x 10⁻⁶ wt%.

Especially preferred are cationic fabric softening compounds that are water-insoluble quaternary ammonium materials having two C12-22 alkyl or alkenyl groups connected to the molecule via at least one ester link, preferably two ester links. Di(tallowoxyloxyethyl) dimethyl ammonium chloride and/or its hardened tallow analogue is an especially preferred compound of this class.

A second preferred type comprises those derived from triethanolamine (hereinafter referred to as 'TEA quats') as described in for example US 3915867. Suitable materials are, for example, N-methyl-N,N,N-triethanolamine ditallowester or di-hardened-tallowester quaternary ammonium chloride or methosulphate. Examples of commercially available TEA quats include Rewoquat WE18 and Rewoquat WE20, both partially unsaturated (ex. WITCO), Tetranyl AOT-1, fully saturated (ex. KAO) and Stepantex VP 85, fully saturated (ex. Stepan).

It is advantageous if the quaternary ammonium material is biologically biodegradable.

It is envisaged that one advantage of using the benefit agent particles of the present invention particularly in rinse conditioner formulations is that it enables the benefit agent to be kept separate away from the surfactant during storage. This is important where a benefit agent, such as a perfume or lubricant, could interact with the surfactant and cause rheology changes in the product. For example, rinse-conditioner formulations (especially those based on less soluble surfactants) are often relatively unstable and the interaction of perfume with the surfactant can lead to large scale phase separation. It is envisaged that sequestering the perfume in particles until it is needed is one way to overcome this problem.

### Other Components:

The composition can contain a hydrotrope. The term "hydrotrope" generally means a compound with the ability to increase the solubilities, preferably aqueous solubilities, of certain slightly soluble organic compounds. Examples of hydrotropes include sodium xylene sulfonate, SCM.

The composition may comprise a solvent such as water or an organic solvent such as isopropyl alcohol or glycol ethers. Solvents are typically present in liquid or gel compositions.

The composition may contain a metal chelating agent such as carbonates, bicarbonates, and sesquicarbonates. The metal chelating agent can be a bleach stabiliser (i.e. heavy metal sequestrant). Suitable metal chelation agents include ethylenediamine tetraacetate (EDTA), diethylenetriamine pentaacetate (DTPA), ethylenediamine disuccinate (EDDS), and the polyphosphonates such as the Dequests (Trade Mark), ethylenediamine tetramethylene phosphonate (EDTMP) and diethylenetriamine pentamethylene phosphate (DETPMP).

Builder materials may be present and can be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetra-acetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Where builder is present, the compositions may suitably contain less than 20%wt, preferably less than 10% by weight, and most preferably less than 10%wt of detergency builder.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

0.8-1.5 M₂O. Al₂O₃. 0.8-6 SiO₂

where M is a monovalent cation, preferably sodium. These materials contain some bound water and are required to have a calcium ion exchange capacity of at least 50 mg CaO/g. The preferred sodium aluminosilicates contain 1.5-3.5 SiO₂ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

For low cost formulations carbonate (including bicarbonate and sesquicarbonate) and/or citrate may be employed as builders.

One or more enzymes may be present in a composition of the invention and when practicing a method of the invention. Especially contemplated enzymes include proteases, alpha-amylases, cellulases, lipases, peroxidases/oxidases, pectate lyases, and mannanases, or mixtures thereof. Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

The composition may comprise one or more additional polymers. Examples are carboxymethylcellulose, poly(vinyl-pyrrolidone), poly (ethylene glycol), poly(vinyl alcohol), poly(vinylpyridine-N-oxide), poly(vinylimidazole), poly-carboxylates such as poly-acrylates, maleic/acrylic acid copolymers and lauryl methacrylate/acrylic acid copolymers.

Modern detergent compositions typically employ polymers as so-called 'dye-transfer inhibitors'. These prevent migration of dyes, especially during long soak times. Any suitable dye-transfer inhibition agents may be used in accordance with the present invention. Generally, such dye-transfer inhibiting agents include polyvinyl pyrrolidone polymers, polyamine N-oxide polymers, copolymers of N-vinylpyrrolidone and N-vinylimidazole, manganese pthalocyanine, peroxidases, and mixtures thereof. Nitrogen-containing, dye binding, DTI polymers are preferred. Of these polymers and co-polymers of cyclic amines such as vinyl pyrrolidone, and/or vinyl imidazole are preferred. The amount of dye transfer inhibition agent in the composition according to the present invention will be from 0.01 to 10 %, preferably from 0.02 to 5 %, more preferably from 0.03 to 2 %, by weight of the composition.

Other polymers used in laundry compositions include soil-release and anti-redeposition polymers as well as polymers which improve powder properties. Polymeric dispersing agents can advantageously be utilized in the compositions herein, especially in the presence of layered silicate builders. Suitable polymeric dispersing agents include polycarboxylates and polyethylene glycols, although others known in the art can also be used.

It is also believed that polymeric dispersing agents enhance overall detergent builder performance, when used in combination with other builders (including lower molecular weight polycarboxylates) by crystal growth inhibition, particulate soil release, peptization, and anti-redeposition.

Polymeric soil release agent known to those skilled in the art can optionally be employed in compositions according to the invention. Polymeric soil release agents are characterized by having both hydrophilic segments, to hydrophilize the surface of hydrophobic fibers, such as polyester and nylon, and hydrophobic segments, to deposit upon hydrophobic fibers and remain adhered thereto through completion of washing and rinsing cycles and, thus, serve as an anchor for the hydrophilic segments. This can enable stains occurring subsequent to treatment with the soil release agent to be more easily cleaned in later washing procedures. Generally the soil release polymers will comprise polymers of aromatic dicarboxylic acids and alkylene glycols (including polymers containing polyalkylene glycols).

It is believed that those polymers which deposit on cloth as a part of their activity may assist in the deposition of hydrophobic benefit agents including pro-fragrance, perfume generated from the pro-fragrance and/or other perfume components present. Other types of polymeric deposition aid may also be used. These include cationic polymeric deposition aids. Suitable cationic polymeric deposition aids include cationic guar polymers such as Jaguar (ex Rhone Poulenc), cationic cellulose derivatives such as Celquats (ex National Starch), Flocaid (ex National Starch), cationic potato starch such as SoftGel (ex Aralose), cationic polyacrylamides such as PCG (ex Allied Colloids). Cationic polymeric aids are particularly preferred.

In order that the invention may be further understood and carried forth into practice, the invention will now be illustrated by the following non-limiting examples. Further modification within the scope of the present invention will be apparent to the person skilled in the art.

### Examples

The reagents used in the experimental procedures described in this report are listed in Table 1 and used as received without further purification.

**Table 1 - Reagents used as described in this report**

| **Reagent** | **Code** | **Molecular weight** | **Hydrolysis degree** | **Supplier** |
|---|---|---|---|---|
| **PVOH** | Mowiol 3-98 | 6000 | 98 % | Kuraray Specialities Europe GmBh |
| **PVOH** | Mowiol 6-98 | 19500 | 98 % | |
| **PVOH** | Mowiol 10-98 | 28000 | 98 % | |
| **PVOH** | Mowiol 20-98 | 42000 | 98 % | |
| **PVOH** | Mowiol 5-88 | 19500 | 88 % | |
| **PVOH** | Mowiol 8-88 | 28000 | 88 % | |
| **PVOH** | Mowiol 18-88 | 42000 | 88 % | |
| **2-sulfobenzaldehyde sodium salt** | S0122 | 208 | -- | Tokyo Chemical Industry Co., Ltd. |
| **n-butyraldehyde** | B0751 | 72 | -- | |
| **4-amino-butyraldehyde** | A1364 | 133 | -- | |

### General methodology for synthesis of modified PVOH polymer

2.0 g PVOH and 20.0 mL deionised water were introduced to a 50 mL roundbottomed flask. The temperature of the mixture was then elevated to 90 °C, and kept at this temperature until the polymer dissolved completely. The solution was then cooled down to 70 °C and HCl catalyst (0.2 mL, 37 % aqueous solution) was added to the solution under stirring. A dilute solution of aldehyde/acetal in deionised water (about 7.0 %, neutral pH) was prepared and the required amount of the solution added dropwise to the reactor over a period of 0.5 hour. After the addition was completed, the reaction mixture was stirred at 70 °C for 5 hours and then at room temperature for additional 20 hours. 1.0 mL of modified PVOH solution was taken out from the reactor after the reaction was completed and frozen-dried. Samples for ¹H NMR spectroscopy characterization were prepared by dissolving polymer powder in d₆-DMSO. The spectrum was recorded by Bruker 400 MHz spectrometer.

### Interaction between mPVOH surfactant

10.0 % modified PVOH solution was mixed with 1.0 % of surfactant solution with various feed ratio and then deionised water added to make the final concentration of modified PVOH to 0.5 %. The mixture was stirred for 10 minutes and the state of the mixture (transparent, turbid or precipitate) observed and recorded.

### Encapsulation method for perfume with mPVOH surfactant

10.0 mg of perfume (containing 0.1 % oil blue N) was mixed with 0.1 mL of mPVOH solution (10.0%) and stirred for 10 minutes. 1.0 mL of surfactant solution (1.0 %) was then added to the mixture and the resultant solution stirred for additional 10 minutes. The resultant solution was observed under microscope.

### Quantitative analysis of released perfume

10.0 mg of perfume (containing 0.1 % oil blue N) was mixed with 0.1 mL of mPVOH solution (10.0 %) and stirred for 10 minutes. 1.0 mL of surfactant solution (1.0 %) was then added to the mixture and the resultant solution stirred for additional 10 minutes. 5.0 mL of *n*-heptane was added to the mixture and the resultant solution stirred at 300 rpm for additional 60 minutes. The amount of perfume in *n*-heptane phase was recorded at 637 nm (absorbance peak for oil blue N) by UV-Vis spectroscopy to calculate the amount of released perfume before dilution. For the experiment to calculate the amount of released perfume with 10 or 100 dilution times, the mixture of perfume, mPVOH and surfactant was diluted 10 or 100 times before *n*-heptane with 5 times' volume of the mixture was added to extract released perfume.

### Example 1: Synthesis of anionically modified PVOH

**Table 2:**

| **Modification degree of PVOH with 2-benzaldehyde solfonic acid, sodium sal** | | |
|---|---|---|
| | | |
| **Sample ID** | **Theoretic MD of 2-benzaldehyde solfonic acid, sodium salt^{e}** | **Experimental MD of 2-benzal-dehyde solfonic acid, sodium salt^{f}** |
| **P061115B ^{a}** | 5.0 % | 5.0 % |
| **P061212A** ^{a} | 15.5 % | 15.5 % |
| **P061127A** ^{a} | 18.3 % | 17.2 % |
| **P061127B ^{a}** | 24.8 % | 22.9 % |
| **P061116A ^{b}** | 5.3 % | 5.3 % |
| **P061128A ^{b}** | 11.9 % | 11.9 % |
| **P061204B ^{b}** | 14.1 % | 13.8 % |
| **P060927B ^{c}** | 8.7 % | 8.7 % |
| **P061129A ^{c}** | 12.4 % | 11.9 % |
| **P061114A ^{d}** | 6.2 % | 6.2 % |
| **P061129B ^{d}** | 12.1 % | 11.4 % |

| | | |
|---|---|---|
| Notes: a. Mw of PVOH is 6000 with hydrolysis degree being 98%; b. Mw of PVOH is 19500 with hydrolysis degree being 98%; c. Mw of PVOH is 28000 with hydrolysis degree being 98%; d. Mw of PVOH is 42000 with hydrolysis degree being 98%; e. Theoretic MD was calculated from feed amount; f. Experimental MD was calculated from ¹H NMR spectra. | | |

**Table 3: Modification degree of PVOH with butyraldehyde**

| **Sample ID** | **Theoretic MD of butyraldehyde^{c}** | **Experimental MD of butyraldehyde^{c}** |
|---|---|---|
| **P061204A-1 ^{a}** | 4.5 % | 4.5 % |
| **P061204A-2 ^{a}** | 13.7 % | 13.7 % |
| **P061204A-3 ^{a}** | 18.6 % | 18.1 % |
| **P061204A-4 ^{a}** | 40.0 % | 38.7 % |
| **P061204B-1 ^{b}** | 3.9 % | 3.9 % |
| **P061204B-2 ^{b}** | 13.7 % | 13.4 % |
| **P061204B-3 ^{b}** | 18.3 % | 17.6 % |
| **P061204B-4 ^{b}** | 34.6 % | 33.2 % |

| | | |
|---|---|---|
| Notes: a. Mw of PVOH is 6000 with hydrolysis degree being 98% and modification degree of 2-benzaldehyde solfonic acid, sodium salt being 15.4%; b. Mw of PVOH is 19500 with hydrolysis degree being 98% and modification degree of 2-benzaldehyde solfonic acid, sodium salt being 13.8%; c. Theoretic MD was calculated from feed amount; d. Experimental MD was calculated from ¹H NMR spectra. | | |

After seeking of maximal MD of the two modification reagents, a series of modification reactions were then carried out for various PVOH possessing different molecular weights and/or different hydrolysis degrees and the results listed in Table 4. All the MDs of these samples were carefully controlled within the maximal MD of both modification reagents.

**Table 4: Modification degree of anionically modified PVOH derivatives**

| **Sample ID** | **Mw of PVOH** | **Hydrolysis degree of PVOH** | **MD of butyraldehyde** | **MD of 2-benzaldehyde solfonic acid, sodium salt** |
|---|---|---|---|---|
| **P061121A** | 6000 | 98 % | -- | 5.4 % |
| **P061212B** | 6000 | 98 % | -- | 9.0 % |
| **P061121B** | 6000 | 98 % | -- | 11.6 % |
| **P061204A** | 6000 | 98 % | -- | 15.4 % |
| **P061115A** | 6000 | 98 % | 9.9 % | 5.2 % |
| **P061120A** | 6000 | 98 % | 13.8 % | 8.1 % |
| **P061123B** | 6000 | 98 % | 10.8 % | 8.4 % |
| **P061120B** | 6000 | 98 % | 19.2 % | 11.2 % |
| **P061108B** | 19500 | 98 % | 10.0 % | 5.4 % |
| **P061116B** | 19500 | 88 % | -- | 5.3 % |
| **P061112A** | 19500 | 88 % | 9.9 % | 4.6 % |
| **P061108A** | 28000 | 98 % | 8.6 % | 5.0 % |
| **P061112B** | 42000 | 98 % | 11.5 % | 5.2 % |
| **P061114B** | 42000 | 88 % | -- | 6.2 % |
| **P061123A** | 42000 | 88 % | 11.1 % | 5.8 % |

| | | | | |
|---|---|---|---|---|
| Note: The modification degree was calculated from ¹H NMR spectra. | | | | |

### Example 2: Encapsulation of perfume by mPVOH and cationic surfactant

Anionically modified PVOH was an amphiphilic polymer with hydrophilic 2-benzaldehyde solfonic acid, sodium salt segment (which is also anionic) and hydrophobic PVOH backbone and butyraldehyde segment (if butyraldehyde was used as modification reagent also). When hydrophobic perfume was mixed with mPVOH in aqueous solution, the mPVOH would adsorb on the interface of perfume/water spontaneously.

The encapsulation of perfume has been carried out by mean of addition solution of both mPVOH and CTAC successively to perfume/water mixture under stirring. The resultant solution was observed under microscope. It could be found that perfume is encapsulated and the average size for the droplet is about 10 microns.

The perfume encapsulation was also performed with mPVOH and commercially available Comfort™ fabric conditioner formulation instead of mPVOH and CTAC.

### Example 3: Validation of cationic surfactant-triggered perfume release

In the experiment, *n*-heptane was used to extract released perfume and its amount quantitatively measured *via* UV-Vis spectroscope. Before dilution, little amount of perfume can be extracted out, which means the shell composed of complex of mPVOH and CTAC can protect encapsulated perfume well and prevent it from leakage. Upon dilution, more and more perfume is extracted out. Upon 100-times dilution, most portion of encapsulated perfume is extracted out.

The result shows that the cationic surfactant concentration could be used as trigger to release perfume from mPVOH-surfactant complex. Compared with the extraction experiment result of perfume mixed with CTAC only, it could be found that it is easier to extract perfume encapsulated by CTAC than that encapsulated by mPVOH-CTAC complex with *n*-heptane as extraction solvent. The result also showed that the mPVOH-CTAC complex was more compact than CTAC micelle for perfume encapsulation and the perfume in mPVOH-CTAC complex shell had higher stability.

**Table 5: Cationic surfactant-triggered perfume release**

| Sample code | Dilution times | Perfume release percentage (%) |
|---|---|---|
| **P061204A-3 (see example 1)** | without dilution | 1.8 |
| | 10 | 5.0 |
| | 100 | 88.4 |
| **P061204B-2 (see example 1)** | without dilution | 0.3 |
| | 10 | 3.8 |
| | 100 | 87.2 |
| **CTAC** | without dilution | 98.2 |

### Example 4: Synthesis of cationically modified PVOH

A series of modification reactions were carried out for various PVOH possessing different molecular weights and/or different hydrolysis degrees and the results listed in Tables 6 and 7. Table 6 shows the cationic modification result of PVOH derivatives. Table 7 shows the modification result of PVOH derivatives with both cationic and hydrophobic reagents.

**Table 6 - Modification degree of cationically modified PVOH derivatives**

| **Sample ID** | **Mw of PVOH** | **Hydrolysis degree of PVOH** | **MD of 4-aminobutyraldehyde dimethyl acetal** |
|---|---|---|---|
| **P070328A** | 19500 | 98 % | 4.9 % |
| **P070411B** | 19500 | 98 % | 7.1 % |
| **P070328B** | 19500 | 98 % | 8.4 % |
| **P070411A** | 19500 | 98 % | 10.3 % |
| **P070308A** | 19500 | 98 % | 10.6 % |
| **P070416A** | 19500 | 98 % | 13.3 % |
| **P070416B** | 19500 | 98 % | 20.5 % |
| **P070423A** | 19500 | 88 % | 15.3 % |
| **P070423B** | 19500 | 88 % | 16.3 % |
| **P070327A** | 28000 | 98 % | 4.3 % |
| **P070327B** | 28000 | 98 % | 6.3 % |
| **P070403A** | 28000 | 98 % | 6.5 % |
| **P070319B** | 28000 | 98 % | 6.6 % |
| **P070319A** | 28000 | 98 % | 7.0 % |
| **P070308B** | 28000 | 98 % | 12.5 % |
| **P070313A** | 28000 | 98 % | 13.6 % |
| **P070403B** | 28000 | 98 % | 14.4 % |
| **P070405A** | 28000 | 98 % | 16.3 % |
| **P070405B** | 28000 | 98 % | 21.6 % |
| **P070329A** | 42000 | 98 % | 3.5 % |
| **P070329B** | 42000 | 98 % | 7.1 % |
| **P070402A** | 42000 | 98 % | 9.3 % |
| **P070402B** | 42000 | 98 % | 10.0 % |

| | | | |
|---|---|---|---|
| Note: The modification degree was calculated from ¹H NMR spectra. | | | |

**Table 7 - Modification degree of cationically and hydrophobically modified PVOH derivatives**

| **Sample ID** | **Mw of PVOH** | **Hydrolysis degree of PVOH** | **MD of 4-aminobutyraldehyde dimethyl acetal** | **MD of butyraldehyde** |
|---|---|---|---|---|
| **P070312A** | 19500 | 98 % | 20.0 % | 11.4 % |
| **P070313B** | 28000 | 98 % | 8.8 % | 13.1 % |
| **P070312B** | 28000 | 98 % | 22.5 % | 15.0 % |
| **P070515A** | 28000 | 98 % | 10.1 % | 26.9 % |
| **P070515B** | 28000 | 98 % | 14.7 % | 27.2 % |
| **P070515B-2** | 28000 | 98 % | 14.1 % | 20.5 % |
| **P070516A** | 28000 | 98 % | 11.5 % | 26.7 % |
| **P070516A-1** | 28000 | 98 % | 17.6 % | 23.6 % |

| | | | | |
|---|---|---|---|---|
| Note: The modification degree was calculated from ¹H NMR spectra. | | | | |

### Example 5: Interaction between cationically modified PVOH and anionic surfactant

The interaction between cationically modified PVOH and LAS has been studied. The main attraction force between them is electrostatic force. Modified PVOH (mPVOH) samples with different modification degree were used in the study. The results are shown in Tables 8, 9 and 1

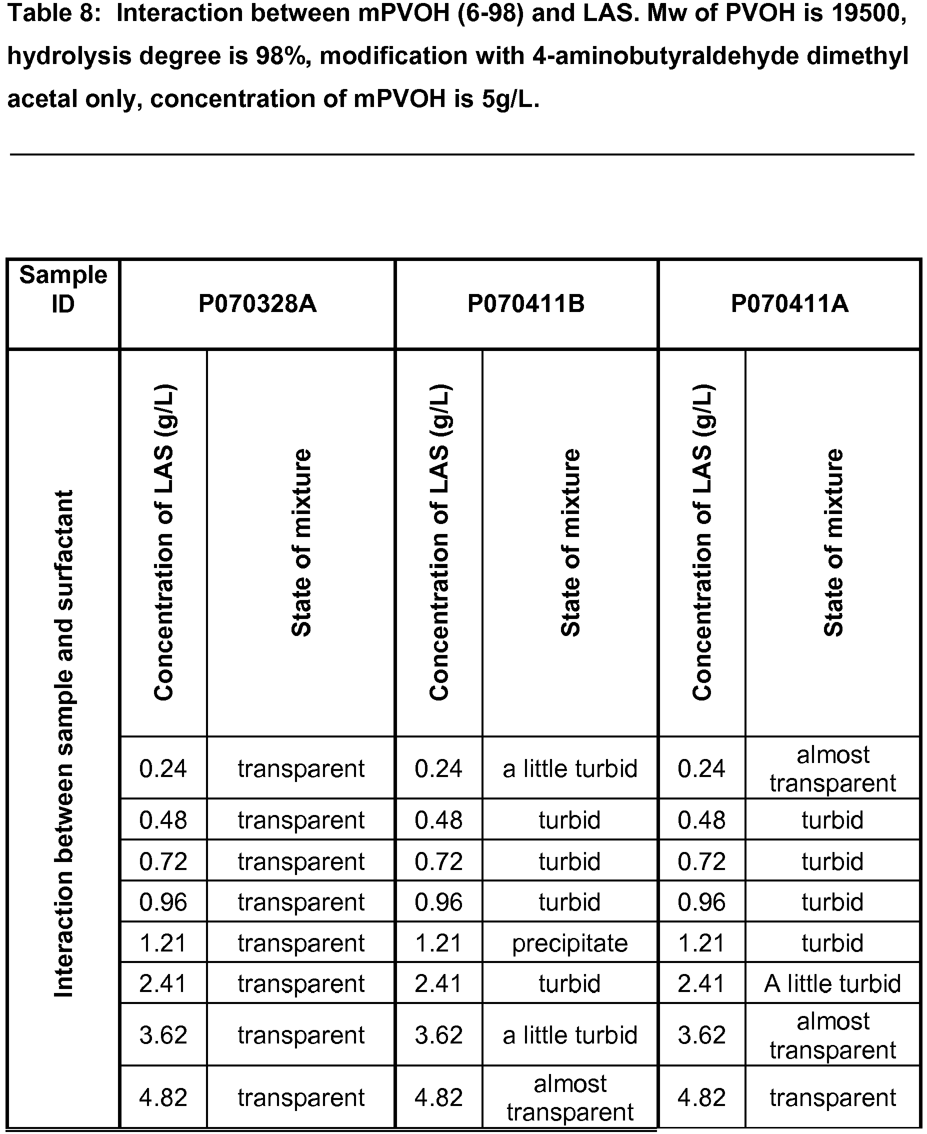

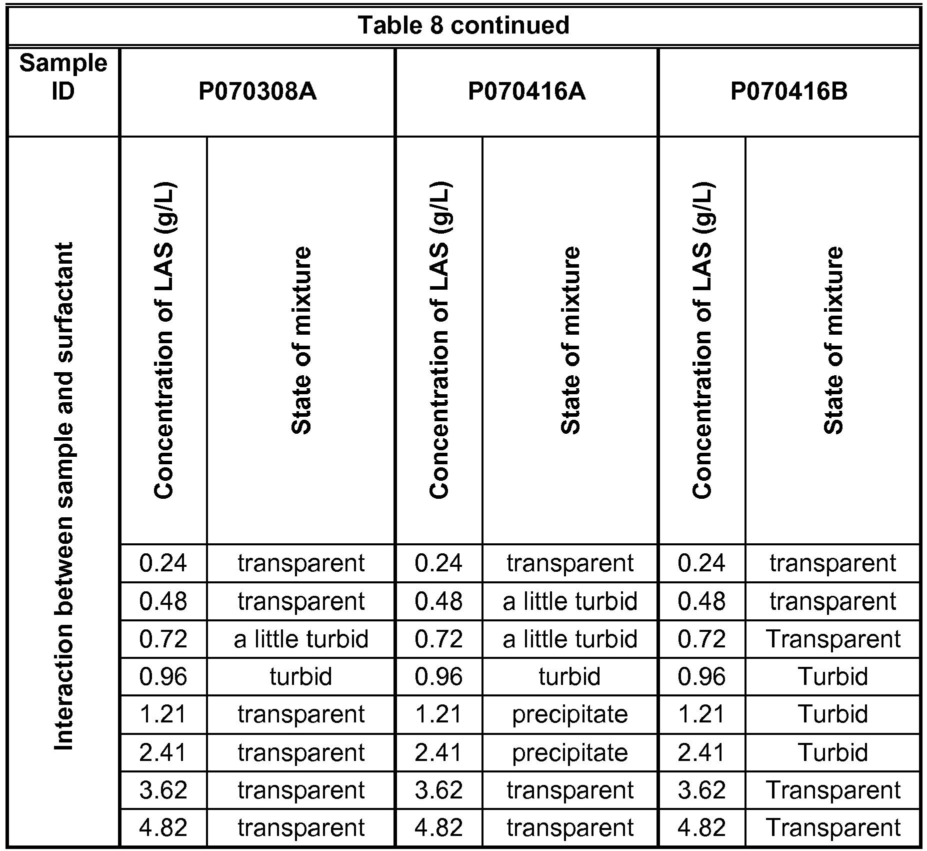

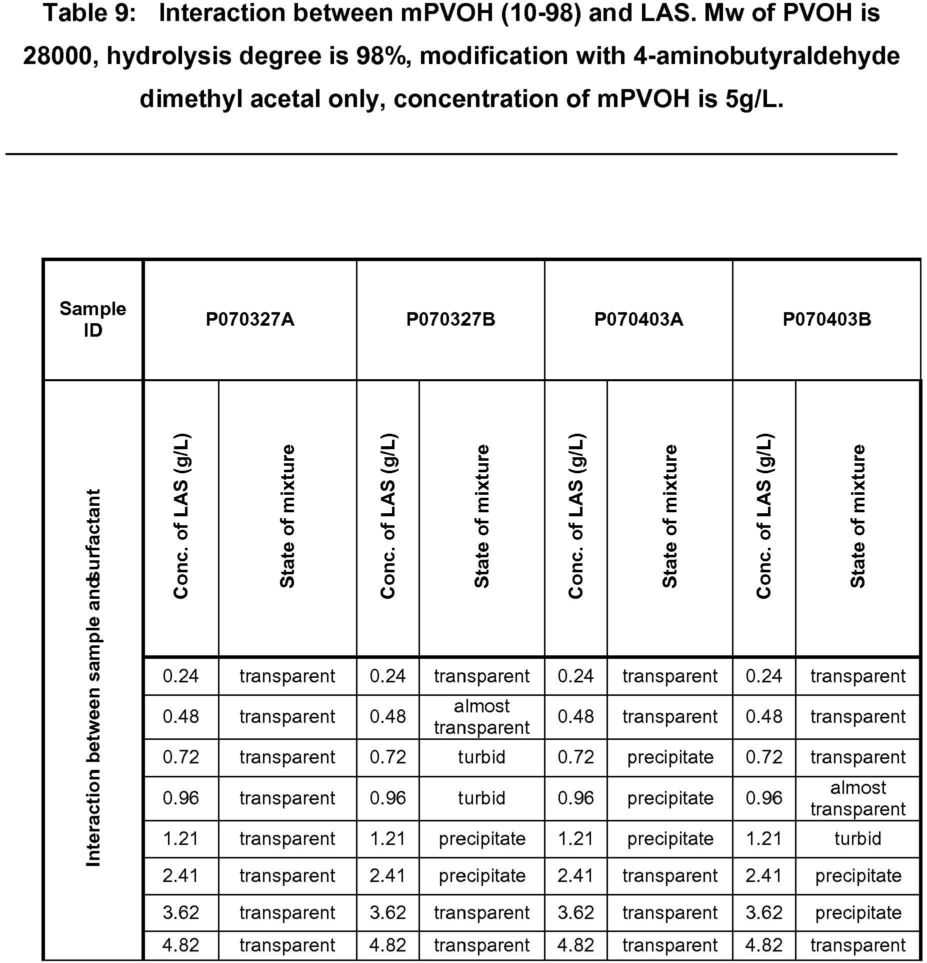

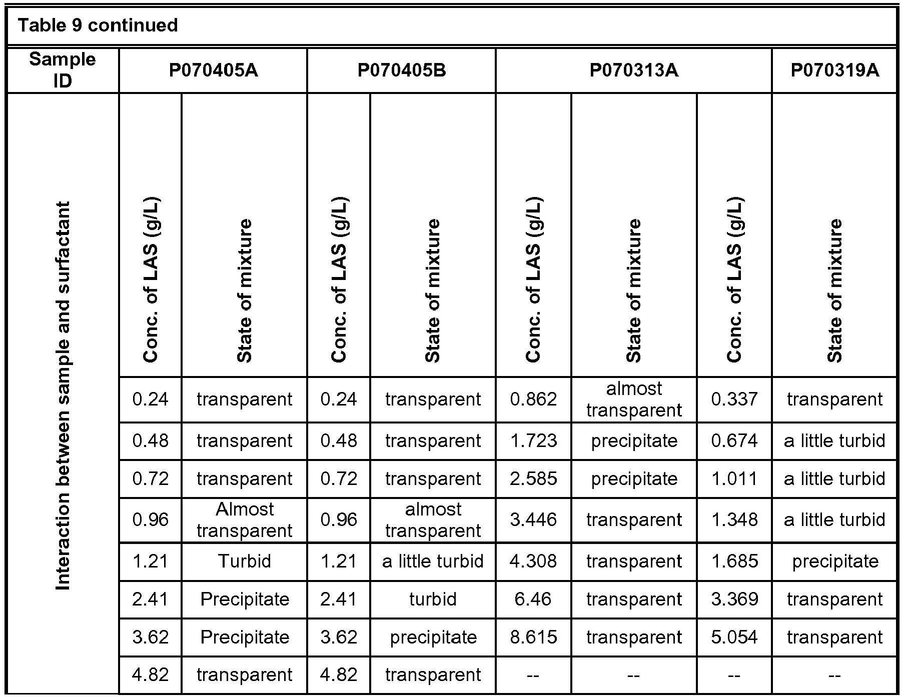

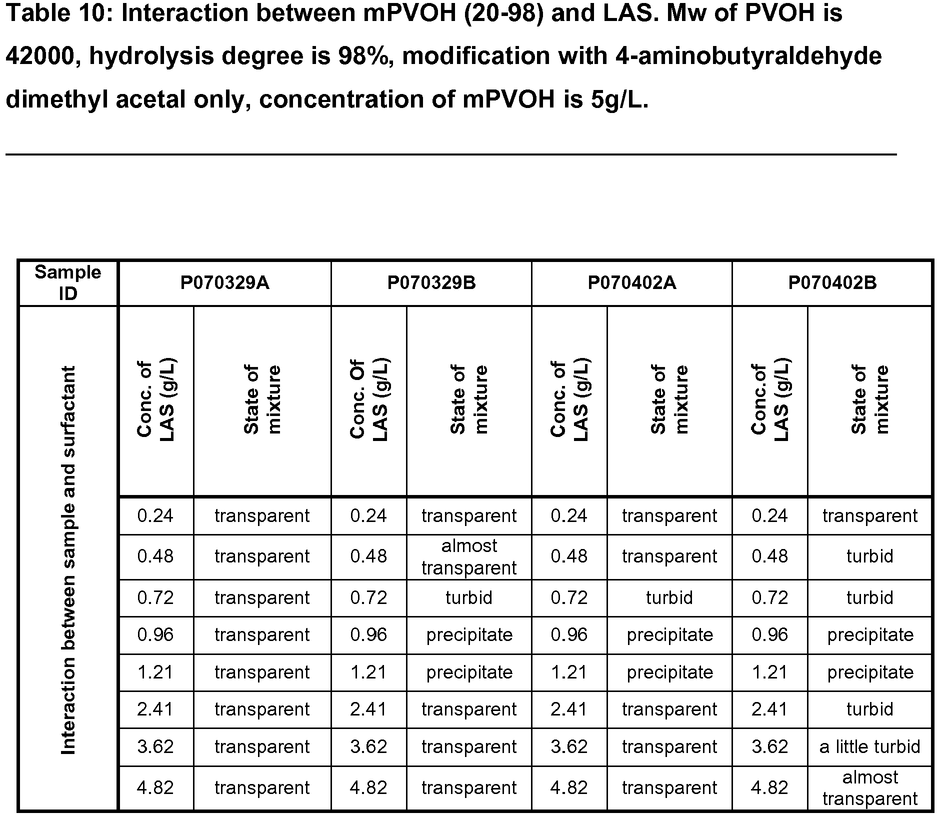

From Tables 8, 9 and 10, it could be found that the mPVOHs with modification degree lower than 5% did not have strong interaction with LAS, the mixture was transparent under all concentrations. When the modification degree increased, the interaction between mPVOH and LAS got stronger, the mixture became turbid, even has precipitate under some concentrations. Precipitate range of mPVOH with higher modification degree and LAS move toward higher concentration of LAS. In addition, it seems that molecular weight or hydrolysis degree of PVOH show litter influence to the interaction between mPVOH and LAS.

### Example 6: Interaction between cationically modified PVOH and mixed surfactant

The interaction between cationically modified PVOH and mixed surfactant has also been investigated. The mixed surfactant was consisted of anionic surfactant (LAS, 50%) and non-ionic surfactant (A7, 50%). A7 is a kind of fatty alcohol poly-oxyethylene ether, which is commonly used in products. Modified PVOH (mPVOH) samples with different modification degree were used in the study. The results are shown in Tables 11, 12 and 13.

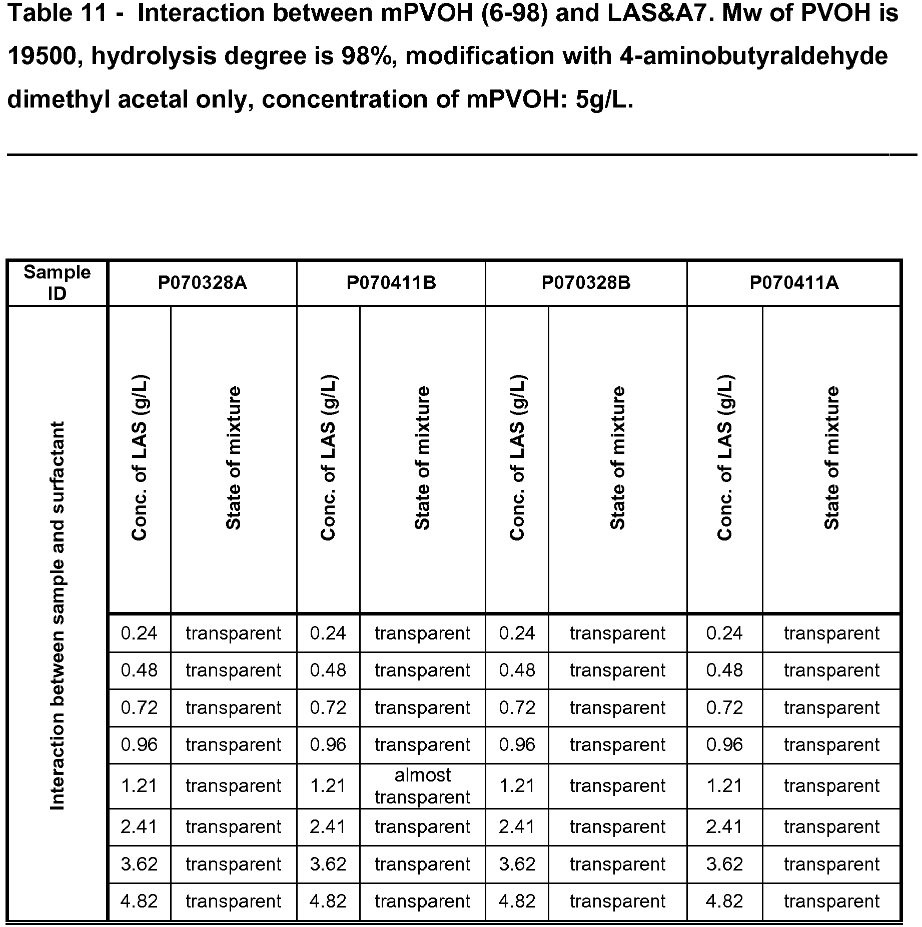

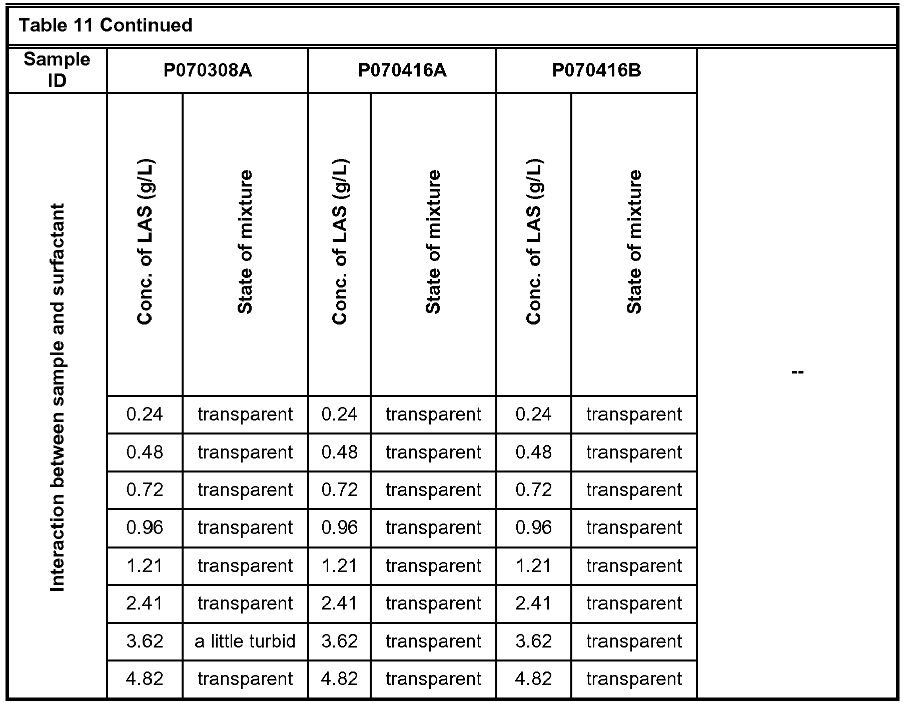

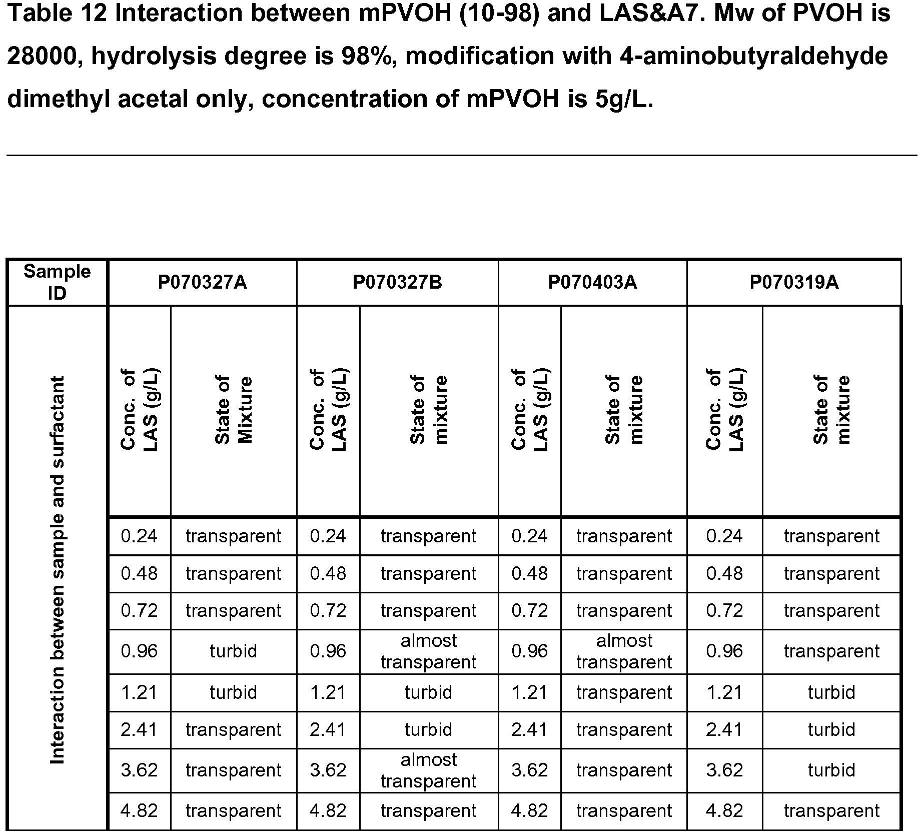

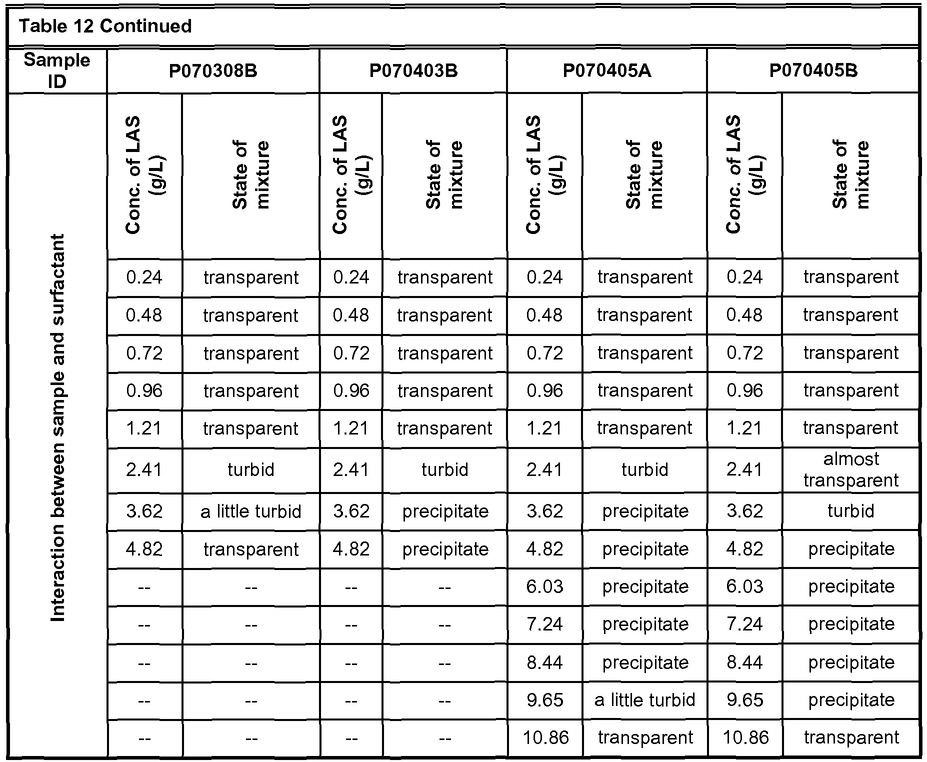

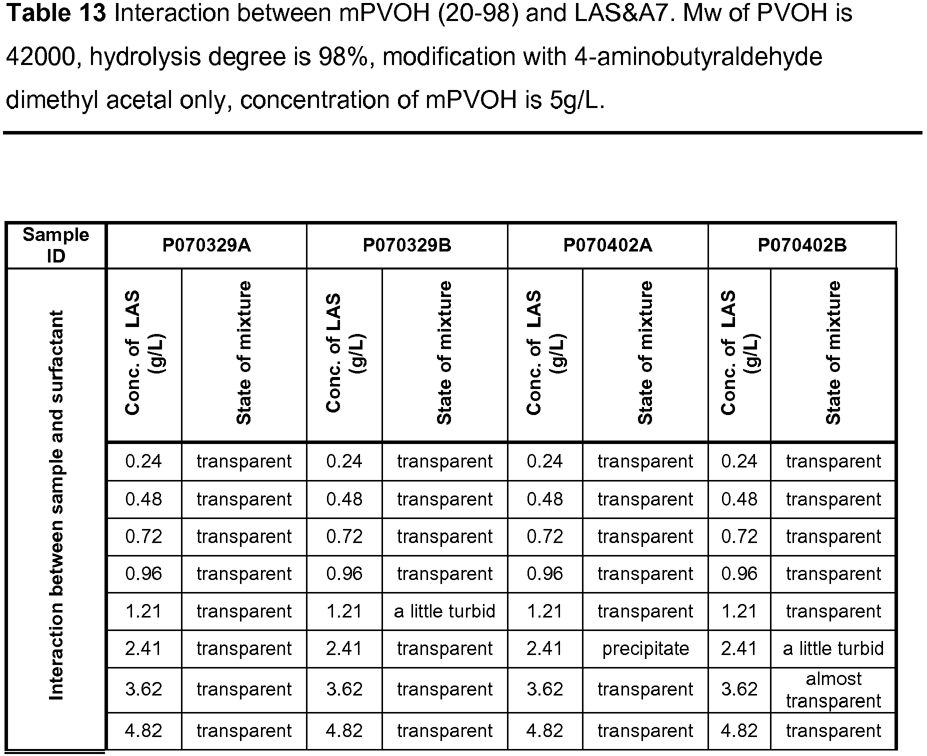

Table 11, 12 and 13, it could be found that the mPVOHs with modification degree lower than 5% did not have strong interaction with LAS&A7, the mixture was transparent under all concentrations. When the modification degree increased, the interaction between mPVOH and LAS became stronger, the mixture became turbid, even has precipitate under some concentrations. Turbid range of mPVOH with higher modification degree and mixed surfactant move toward higher concentration of LAS&A7.

In order to increase the interaction between mPVOH and mixed surfactant, modified PVOH samples with high modification degree of both cationic side chain and hydrophobic side chain were used for the same experiment. The results were shown in Table 14. From Table 14, it could be found that the mPVOHs with modification of both cationic side chain and hydrophobic side chain have strong interaction with LAS&A7. The precipitate range is expanded. So it could be concluded that introduction of hydrophobic side chain could increases the interaction between mPVOH and surfactant.

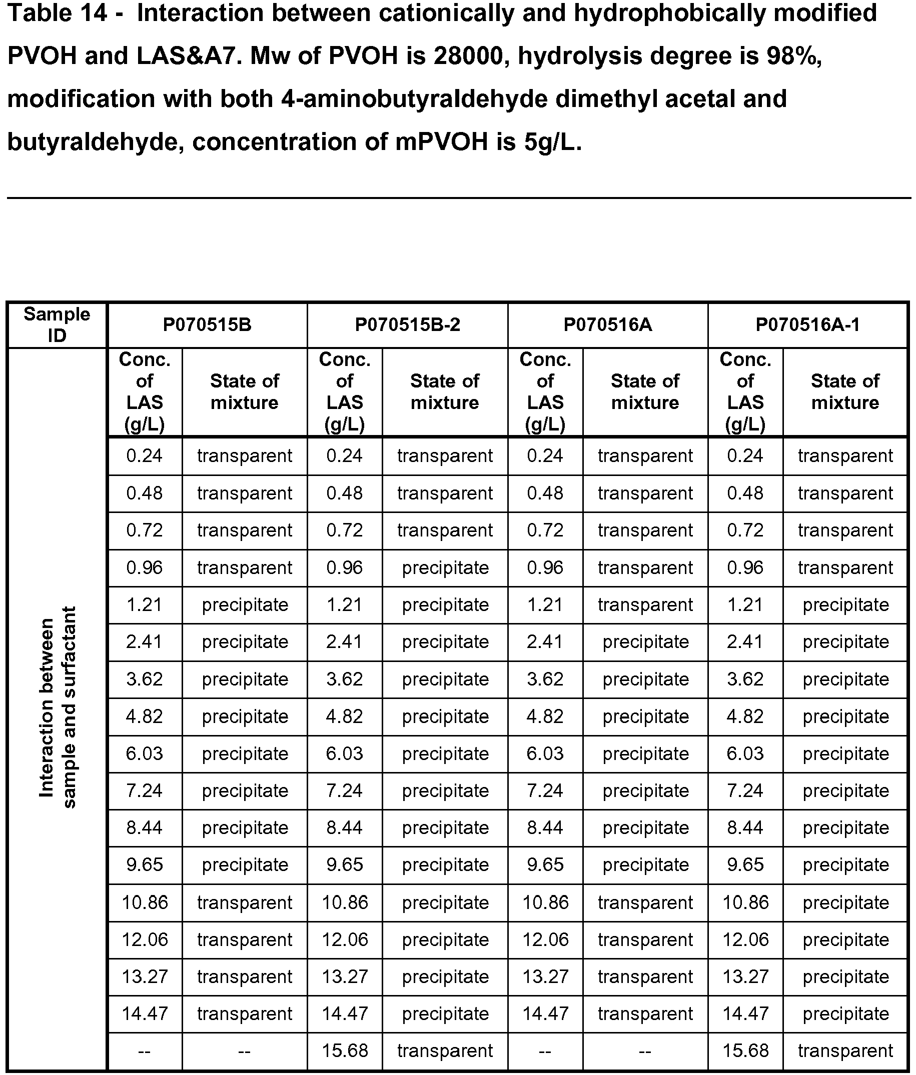

### Example 7: Encapsulation of perfume by mPVOH and anionic surfactant

The encapsulation of perfume had also been performed with both mPVOH and LAS. The resultant solution was observed under microscope and it could be found that perfume is encapsulated and the average droplet size is about 7 microns.

### Example 8: Validation of anionic surfactant-triggered perfume release

The concept of anionic surfactant-triggered perfume release was validated. In these experiments, *n*-heptane was used to extract released perfume and its amount was quantitatively measured *via* UV-Vis spectroscope (Table 15). Before dilution, little amount of perfume could be extracted out. That means the mPVOH-LAS complex can protect encapsulated perfume well and prevent it from leakage. Upon dilution, more and more perfume is extracted out. With 100-times dilution, most portion of encapsulated perfume is extracted out. The result shows that the cationic surfactant concentration could be used as trigger to release perfume from mPVOH-surfactant complex.

**Table 15 - Anionic surfactant-triggered perfume release**

| **Sample code** | **Dilution times** | **Perfume release percentage (%)** |
|---|---|---|
| **P070516A-1 (see table 7)** | without dilution | 7.7 |
| | 10 | 49.1 |
| | 100 | 98.3 |

## Claims

1. A liquid fabric treatment composition comprising either an anionic detersive surfactant or a cationic surfactant which is a conditioning softening active, and:
a particle, having a diameter of less than 2 mm comprising:
a) a central core of benefit agent, and
b) surrounding the central core, a shell of a water soluble (as defined herein) polymeric film-forming material, which is a polyvinyl alcohol:
i) modified with a charged derivatising group, wherein the parent material from which the charged derivatising group is obtained is an acetal or aldehyde, and the charged derivatising group comprises at least 0.1 % by weight, based on the total weight of the polymer and
ii) optionally, modified with a hydrophobic second derivatising group which is derived from a parent material having a ClogP, calculated according to the method referred to in the description, of greater than 0.5,
wherein the film remains intact in the presence of a surfactant, and disintegrates when the concentration of the surfactant reduces to a concentration of less than 1 g/L, thereby releasing the benefit agent.

2. A composition according to claim 1 wherein said particle has a diameter less than 1 mm, preferably less than 100 microns, more preferably less than 50 microns.

3. A composition according to any preceding claim wherein the modified polymer is derived from polyvinyl alcohol with a hydrolysis range of from 60-99%.

4. A composition according to any preceding claim wherein the modified polymer is derived from polyvinyl alcohol and has an average degree of saponification within the range from 70 to 99%.

5. A composition according to any preceding claim wherein the modified polymer is derived from polyvinyl alcohol and has a viscosity as a 7% solution within the range 100 to 5000 maPa.s at ambient temperature measured at a shear rate of 20s⁻.

6. A composition according to any preceding claim wherein the charged derivatising material is present in the polymer such that the number ratio of the derivative groups to the free hydroxyl pairs on the backbone of the polymer is from 1:1 to 1:30.

7. A composition according to any preceding claim wherein the polymer is modified with a hydrophobic derivatising group which is derived from a parent material having a ClogP of greater than 0.5.

8. A composition according to any preceding claim wherein the hydrophobic derivatising group is based on a parent group selected from the group consisting of acetals, ketals, esters, fluorinated organic compounds, ethers, alkanes, alkenes, aromatics.

9. A composition according to any preceding claim wherein the parent material for the hydrophobic derivatising group is selected from the group comprising: butyraldehyde, octyl aldehyde, dodecyl aldehyde, 2-ethyl hexanal, cyclohexane carboxy-aldehyde, citral, propionaldehyde, (2-methoxyethoxy) acetaldehyde dimethylacetal, and benzaldehyde,

10. A composition according to any of claims 1-9 wherein the parent material for the charged derivatising material is selected from:
a) the group consisting of:
2-benzaldehyde sulphonic acid (4-nitro benzyloxy)benzaldehyde,
2-carboxybenzaldehyde,
4-nitrocinnamaldehyde,
2-nitro-benzaldehyde,
4-chloro-3-nitrobenzaldehyde,
3-nitrobenzaldehyde,
2-hydroxy-3-methoxy-5-nitrobenzaldehyde,
6-nitroveratraldehyde,
4-carboxybenzaldehyde,
2,4-dinitro-benzaldehyde,
4-methoxy-3-nitrobenzaldehyde,
4-hydroxy-3-nitrobenzaldehyde,
5-nitro-2-furaldehyde diacetate,
3,5-dinitrosalicylaldehyde,
3-carboxybenzaldehyde,
3-nitro-4-(1-pyrrolidino)benzaldehyde,
2-hydroxy-3-nitrobenzaldehyde,
pyridine-2-carboxaldehyde 4-nitrophenylhydrazone,
1-(dimethylaminomethyl) cyclopentanecarboxaldehyde,
5-benzyloxyindole-3-carboxaldehyde,
5-nitrothiophene-2-carbaxaldehyde,
3-bromo-2-hydroxy-5-nitrobenzaldehyde,
2-nitrothiophene-4-carboxaldehyde,
5-hydroxy-2-nitrobenzaldehyde,
4-methyl-3-nitrobenzaldehyde,
1-(2-nitrobenzyl)pyrrole-2-carboxaldehyde,
2-carboxy-3,4-dimethoxybenzaldehyde,
2-fluoro-5-nitrobenzaldehyde,
5-methoxy-1-methyl-4-nitroindole-3-carboxaldehyde,
5-fluoro-2-nitrobenzaldehyde and mixtures thereof, or,
b) the group consisting of:
4-aminobutyraldehyde dimethyl acetal aminoacetaldehyde diethyl acetal,
anilinoacetaldehyde diethyl acetal,
N,N-dimethylformamide dimethyl acetal,
N-benzylaminoacetaldehyde diethyl acetal,
aminoacetaldehyde dimethyl acetal,
pyridine-4-carboxaldehyde,
1-methylpyrrole-2-carboxaldehyde,
pyridine-2-carboxaldehyde,
4-dimethylaminobenzaldehyde,
4-diethylaminobenzaldehyde,
pyrrole-2-carboxaldehyde,
2-chlarobenzaldehyde thiosemicarbazone,
pyridine-3-carboxaldehyde,
indole-3-carboxaldehyde,
3,5-dinitrosalicylaldehyde,
2-phenylindole-3-carboxaldehyde,
4-dimethylamino-cinnamaldehyde,
4-dimethylaminobutyraldehyde diethyl acetal,
5-chloroindole-3-carboxaldehyde,
indole-5-carboxaldehyde,
1-methylbenzimidazole-2-carboxaldehyde,
2-(2,2,2-trimethylacetamido)pyridine-3-carboxaldehyde,
2-amino-5-iodopyridine-3-carboxaldehyde,
3-aminopyridine-4-carboxaldehyde,
4-aminopyridine-3-carboxaldehyde,
4-amino-5-iodopyridine-3-carboxaldehyde,
2-chloro-4-iodopyridine-3-carboxaldehyde,
5-bromo-2-methoxypyridine-3-carboxaldehyde,
2-methoxypyridine-3-carboxaldehyde,
2-ethoxypyridine-3-carboxaldehyde,
2-isopropoxypyridine-3-carboxaldehyde,
2-(cyclopropylmethoxy) pyridine-3-carboxaldehyde,
2-chloropyridine-4-carboxaldehyde,
2-n-propoxypyridine-3-carboxaldehyde,
2-cyclopentyloxypyridine-3-carboxaldehyde,
2-(2,2,2-trifluoroethoxy)pyridine-3-carboxaldehyde,
6-(1-pyrrolidino)pyridine-3-carboxaldehyde,
6-(1-piperidino)pyridine-3-carboxaldehyde,
6-cyclopentyl-oxypyridine-3-carboxaldehyde,
6-cyclohexyloxypyridine-3-carboxaldehyde,
5-bromopyridine-2-carboxaldehyde,
2-(3-dimethylaminopropoxy)benzaldehyde,
1,3,5-trimethyl-1H-pyrazole-4-carbox-aldehyde,
5-benzyloxy-6-azaindole-3-carboxaldehyde,
3-(p-tolyl)-1H-pyrazole-4-carboxaldehyde,
N-methylaminoacetaldehyde dimethyl acetal,
dimethylaminoacetaldehyde diethyl acetal,
4-Diethylaminosalicylaldehyde,
4-aminobutyraldehyde diethyl acetal,
2-amino-5-chlorobenzaldehyde,
2-bromopyridine-4-carboxaldehyde,
2-aminopyridine-3-carboxaldehyde,
4-dimethylaminobenzaldehyde and mixtures thereof

11. A composition according to any of claims 1-10 wherein the water soluble polymeric film-forming material has the formula: 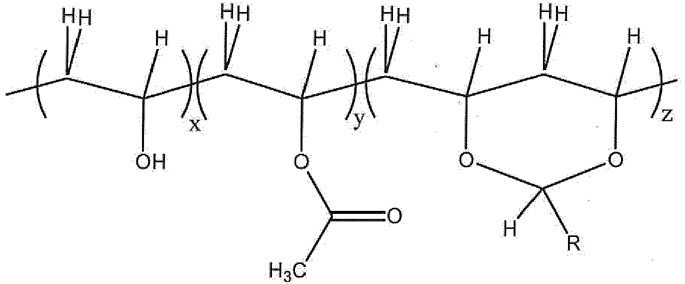 wherein the average number ratio of z to x is within the range of from 1:200 to 1:6, more preferably from 1:100 to 1:8, most preferably from 1:50 to 1:12, e.g. 9:30 to 1:14, y is the residual acetate remaining from the hydrolysis of the parent compound, which is preferably in the range of from 1-20 %, more preferably 1-10 %, most preferably 1-5 % and R is a charged or hydrophobic derivatising group preferably derived from alkyl or alkenyl group having from 3 to 22 carbon atoms.

## Patentansprüche

1. Flüssige Textilbehandlungszusammensetzung, umfassend entweder ein anionisches Reinigungsmitteltensid oder ein kationisches Tensid, das ein Konditionierungsweichmacher ist, und
ein Partikel mit einem Durchmesser von weniger als 2 mm, umfassend:
a) einen zentralen Kern vom Vorteilsmittel und
b) eine den zentralen Kern umgebende Hülle eines wasserlöslichen (wie hierin definierten) polymeren filmbildenden Materials, welches einen Polyvinylalkohol darstellt,
(i) modifiziert mit einer geladenen derivatisierenden Gruppe, wobei das Ausgangsmaterial, von dem die geladene derivatisierende Gruppe erhalten worden ist, ein Acetal oder Aldehyd darstellt und die geladene derivatisierende Gruppe mindestens 0,1 Gew.-%, bezogen auf das Gesamtgewicht des Polymers, umfasst,
(ii) optional modifiziert mit einer hydrophoben zweiten derivatisierenden Gruppe, die von einem Ausgangsmaterial mit einem ClogP, berechnet entsprechend der Methode, auf die in der Beschreibung Bezug genommen wird, von mehr als 0,5 abgeleitet ist,
wobei der Film in Gegenwart eines Tensids intakt bleibt und zerfällt, wenn sich die Konzentration des Tensids auf eine Konzentration von weniger als 1 g/l reduziert, wodurch das Vorteilsmittel freigesetzt wird.

2. Zusammensetzung nach Anspruch 1, wobei das Partikel einen Durchmesser von weniger als 1 mm, vorzugsweise weniger als 100 Mikron, bevorzugter weniger als 50 Mikron, aufweist.

3. Zusammensetzung nach irgendeinem vorhergehenden Anspruch, wobei das modifizierte Polymer von Polyvinylalkohol mit einem Hydrolysegrad von 60-99% abgeleitet ist.

4. Zusammensetzung nach irgendeinem vorhergehenden Anspruch, wobei das modifizierte Polymer von Polyvinylalkohol abgeleitet ist und einen durchschnittlichen Verseifungsgrad in dem Bereich von 70 bis 99% aufweist.

5. Zusammensetzung nach irgendeinem vorhergehenden Anspruch, wobei das modifizierte Polymer von Polyvinylalkohol abgeleitet ist und als 7%-ige Lösung bei Raumtemperatur eine Viskosität innerhalb des Bereichs von 100 bis 5000 mPa.s, gemessen bei einer Scherrate von 20 s⁻¹, aufweist.

6. Zusammensetzung nach irgendeinem vorhergehenden Anspruch, wobei das geladene derivatisierende Material in dem Polymer derartig vorliegt, dass das zahlenmäßige Verhältnis der derivativen Gruppen zu den freien Hydroxylpaaren auf dem Grundgerüst des Polymers von 1:1 bis 1:30 beträgt.

7. Zusammensetzung nach irgendeinem vorhergehenden Anspruch, wobei das Polymer mit einer hydrophoben derivatisierenden Gruppe modifiziert ist, die von einem Ausgangsmaterial mit einem ClogP von mehr als 0,5 abgeleitet ist.

8. Zusammensetzung nach irgendeinem vorhergehenden Anspruch, wobei die hydrophobe derivatisierende Gruppe auf einer Ausgangsgruppe basiert, die aus der aus Acetalen, Ketalen, Estern, fluorierten organischen Verbindungen, Ethern, Alkanen, Alkenen und aromatischen Materialien bestehenden Gruppe ausgewählt ist.

9. Zusammensetzung nach irgendeinem vorhergehenden Anspruch, wobei das Ausgangsmaterial für die hydrophobe derivatisierende Gruppe aus der Gruppe ausgewählt ist, die Butyraldehyd, Octylaldehyd, Dodecylaldehyd, 2-Ethylhexanal, Cyclohexancarboxyaldehyd, Citral, Propionaldehyd, (2-Methoxyethoxy)acetaldehyddimethylacetal und Benzaldehyd umfasst.

10. Zusammensetzung nach irgendeinem der Ansprüche 1 bis 9, wobei das Ausgangsmaterial für das geladene derivatisierende Material ausgewählt ist unter:
a) der Gruppe, bestehend aus:
2-Benzaldehydsulfonsäure (4-nitro-benzyloxy)benzaldehyd,
2-Carboxybenzaldehyd,
4-Nitrozimtaldehyd,
2-Nitrobenzaldehyd,
4-Chlor-3-nitrobenzaldehyd,
3-Nitrobenzaldehyd,
2-Hydroxy-3-methoxy-5-nitrobenzaldehyd,
6-Nitroveratraldehyd,
4-Carboxybenzaldehyd,
2,4-Dinitrobenzaldehyd,
4-Methoxy-3-nitrobenzaldehyd,
4-Hydroxy-3-nitrobenzaldehyd,
5-Nitro-2-furaldehyd-diacetat,
3,5-Dinitrosalicylaldehyd,
3-Carboxybenzaldehyd,
3-Nitro-4-(1-pyrrolidino)benzaldehyd,
2-Hydroxy-3-nitrobenzaldehyd,
Pyridin-2-carboxaldehyd-4-nitrophenylhydrazon,
1-(Dimethylaminomethyl)cyclopentancarboxaldehyd,
5-Benzyloxyindol-3-carboxaldehyd,
5-Nitrothiophen-2-carboxaldehyd,
3-Brom-2-hydroxy-5-nitrobenzaldehyd,
2-Nitrothiophen-4-carboxaldehyd,
5-Hydroxy-2-nitrobenzaldehyd,
4-Methyl-3-nitrobenzaldehyd,
1-(2-Nitrobenzyl)pyrrol-2-carboxaldehyd,
2-Carboxy-3,4-dimethoxybenzaldehyd,
2-Fluor-5-nitrobenzaldehyd,
5-Methoxy-1-methyl-4-nitroindol-3-carboxaldehyd,
5-Fluor-2-nitrobenzaldehyd und Mischungen davon, oder
b) der Gruppe, bestehend aus:
4-Aminobutyraldehyddiemthylacetalaminoacetaldehyddiethylacetal,
Anilinoacetaldehyddiethylacetal,
N,N-Dimethylformamiddimethylacetal,
N-Benzylaminoacetaldehyddiethylacetal,
Aminoacetaldehyddimethylacetal,
Pyridin-4-carboxaldehyd,
1-Methylpyrrol-2-carboxaldehyd,
Pyridin-2-carboxaldehyd,
4-Diemethylaminobenzaldehyd,
4-Diethylaminobenzaldehyd,
Pyrrol-2-carboxaldehyd,
2-Chlorbenzaldehydthiosemicarbazon,
Pyridin-3-carboxaldehyd,
Indol-3-carboxaldehyd,
3,5-Dinitrosalicylaldehyd,
2-Phenylindol-3-carboxaldehyd,
4-Dimethylaminozimtaldehyd,
4-Dimethylaminobutyraldehyddiethylacetal,
5-Chlorindol-3-carboxaldehyd,
Indol-5-carboxaldehyd,
1-Methylbenzimidazol-2-carboxaldehyd,
2-(2,2,2-Trimethylacetamido)pyridin-3-carboxaldehyd,
2-Amino-5-iodpyridin-3-carboxaldehyd,
3-Aminopyridin-4-carboxaldehyd,
4-Aminopyridin-3-carboxaldehyd,
4-Amino-5-iodpyridin-3-carboxaldehyd,
2-Chlor-4-iodpyridin-3-carboxaldehyd,
5-Brom-2-methoxypyridin-3-carboxaldehyd,
2-Methoxypyridin-3-carboxaldehyd,
2-Ethoxypyridin-3-carboxaldehyd,
2-Isopropoxypyridin-3-carboxaldehyd,
2-(Cyclopropylmethoxy)pyridin-3-carboxaldehyd,
2-Chlorpyridin-4-carboxaldehyd,
2-n-Propoxypyridin-3-carboxaldehyd,
2-Cyclopentyloxypyridin-3-carboxaldehyd,
2-(2,2,2-Trifluorethoxy)pyridin-3-carbodaldehyd,
6-(1-Pyrrolidino)pyridin-3-carboxaldehyd,
6-(1-Piperidino)pyridin-3-carboxaldehyd,
6-Cyclopentyl-oxypyridin-3-carboxaldehyd,
6-Cyclohexyloxypyridin-3-carboxaldehyd,
5-Brompyridin-2-carboxaldehyd,
2-(3-Dimethylaminopropoxy)benzaldehyd,
1,3,5-Trimethyl-1H-pyrazol-4-carboxaldehyd,
5-Benzyloxy-6-azaindol-3-carboxaldehyd,
3-(p-Tolyl)-1H-pyrazol-4-carboxaldehyd,
N-Methylaminoacetaldehyddimethylacetal,
Dimethylaminoacetaldehyddiethylacetal,
4-Diethylaminosalicylaldehyd,
4-Aminobutyraldehyddiethylacetal,
2-Amino-5-chlorbenzaldehyd,
2-Brompyridin-4-carboxaldehyd,
2-Aminopyridin-3-carboxaldehyd,
4-Dimethylaminobenzaldehyd und Mischungen davon.

11. Zusammensetzung nach irgendeinem der Ansprüche 1 bis 10, wobei das wasserlösliche polymere filmbildende Material die Formel 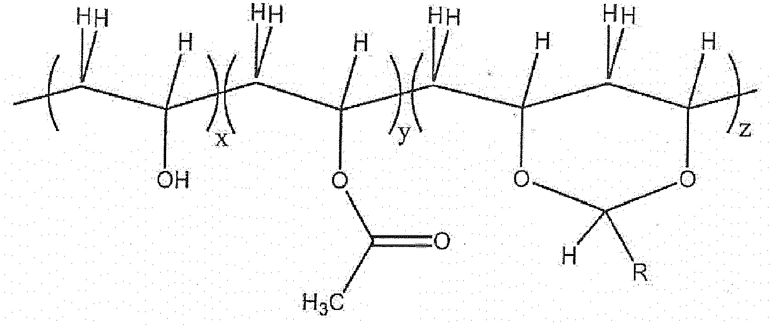 aufweist, wobei das durchschnittliche Zahlenverhältnis von z zu x innerhalb des Bereichs von 1:200 bis 1:6, bevorzugter von 1:100 bis 1:8, höchst bevorzugt von 1:50 bis 1:12, z.B. 1:30 bis 1:14, liegt, y das restliche Acetat darstellt, das von der Hydrolyse der Ausgangsverbindung verbleibt, welches vorzugsweise in dem Bereich von 1-20%, bevorzugter 1-10%, höchst bevorzugt 1-5% liegt und R eine geladene oder hydrophobe derivatisierende Gruppe darstellt, die vorzugsweise von einer Alkyl- oder Alkenylgruppe mit 3 bis 22 Kohlenstoffatomen abgeleitet ist.

## Revendications

1. Composition de traitement de textile liquide comprenant soit un tensioactif détersif anionique, soit un tensioactif cationique qui est un actif assouplissant conditionnant, et :
une particule, ayant un diamètre inférieur à 2 mm comprenant :
a) un noyau central d'agent bénéfique, et
b) entourant le noyau central, une enveloppe d'un matériau formant un film polymère (comme défini ici) soluble dans l'eau, lequel est un poly(alcool vinylique) :
i) modifiée avec un groupe de formation de dérivé chargé, où le matériau parent à partir duquel le groupe de formation de dérivé chargé est obtenu est un acétal ou aldéhyde, et le groupe de formation de dérivé chargé représente au moins 0,1 % en masse, rapporté à la masse totale du polymère et
ii) éventuellement, modifiée avec un second groupe de formation de dérivé hydrophobe lequel est dérivé d'un matériau parent ayant un ClogP calculé selon le procédé cité dans la description, supérieur à 0,5,
où le film reste intact en présence d'un tensioactif, et se désintègre lorsque la concentration du tensioactif se réduit à une concentration inférieure à 1 g/l, libérant par-là l'agent bénéfique.

2. Composition selon la revendication 1, où ladite particule présente un diamètre inférieur à 1 mm, de préférence inférieur à 100 microns, encore mieux inférieur à 50 microns.

3. Composition selon l'une quelconque des revendications précédentes, où le polymère modifié est dérivé de poly(alcool vinylique) avec un intervalle d'hydrolyse de 60-99 %.

4. Composition selon l'une quelconque des revendications précédentes, où le polymère modifié est dérivé de poly(alcool vinylique) et présente un degré moyen de saponification dans l'intervalle de 70 à 99 %.

5. Composition selon l'une quelconque des revendications précédentes, où le polymère modifié est dérivé de poly(alcool vinylique) et présente une viscosité comme une solution à 7 % dans l'intervalle de 100 à 5 000 mPa.s à température ambiante mesurée à une vitesse de cisaillement de 20 s⁻¹.

6. Composition selon l'une quelconque des revendications précédentes, où le matériau de formation de dérivé chargé est présent dans le polymère de sorte que le rapport en nombre des groupes dérivés aux paires hydroxyle libres sur le squelette du polymère est de 1:1 à 1:30.

7. Composition selon l'une quelconque des revendications précédentes, où le polymère est modifié avec un groupe de formation de dérivé hydrophobe qui est dérivé d'un matériau parent ayant un ClogP supérieur à 0,5.

8. Composition selon l'une quelconque des revendications précédentes, où le groupe de formation de dérivé hydrophobe est basé sur un groupe parent choisi dans le groupe constitué d'acétals, de cétals, d'esters, de composés organiques fluorés, d'éthers, d'alcanes, d'alcènes, d'aromatiques.

9. Composition selon l'une quelconque des revendications précédentes, où le matériau parent pour le groupe de formation de dérivé hydrophobe est choisi dans le groupe comprenant : le butyraldéhyde, l'octylaldéhyde, le dodécylaldéhyde, le 2-éthylhexanal, le cyclohexane carboxy-aldéhyde, le citral, le propionaldéhyde, le (2-méthoxy-éthoxy)acétaldéhyde, le diméthylacétal, et le benzaldéhyde.

10. Composition selon l'une quelconque des revendications 1-9, où le matériau parent pour le matériau de formation de dérivé chargé est choisi dans :
a) le groupe consistant en :
acide 2-benzaldéhydesulfonique,
(4-nitro-benzyloxy)benzaldéhyde,
2-carboxybenzaldéhyde,
4-nitrocinnamaldéhyde,
2-nitro-benzaldéhyde,
4-chloro-3-nitrobenzaldéhyde,
3-nitrobenzaldéhyde,
2-hydroxy-3-méthoxy-5-nitrobenzaldéhyde,
6-nitrovératraldéhyde,
4-carboxybenzaldéhyde,
2,4-dinitro-benzaldéhyde,
4-méthoxy-3-nitrobenzaldéhyde,
4-hydroxy-3-nitrobenzaldéhyde,
diacétate de 5-nitro-2-furaldéhyde,
3,5-dinitrosalicyladéhyde,
3-carboxybenzaldéhyde,
3-nitro-4-(1-pyrrolidino)benzaldéhyde,
2-hydroxy-3-nitrobenzaldéhyde,
pyridine-2-carboxaldéhyde 4-nitrophénylhydrazone,
1-(diméthylaminométhyl)cyclopentanecarboxaldéhyde,
5-benzyloxyindole-3-carboxaldéhyde,
5-nitrothiophène-2-carboxaldéhyde,
3-bromo-2-hydroxy-5-nitrobenzaldéhyde,
2-nitrothiophène-4-carboxaldéhyde,
5-hydroxy-2-nitrobenzaldéhyde,
4-méthyl-3-nitrobenzaldéhyde,
1-(2-nitrobenzyl)pyrrole-2-carboxaldéhyde,
2-carboxy-3,4-diméthoxybenzaldéhyde,
2-fluoro-5-nitrobenzaldéhyde,
5-méthoxy-1-méthyl-4-nitroindole-3-carboxaldéhyde,
5-fluoro-2-nitrobenzaldéhyde et des mélanges de ceux-ci, ou,
b) le groupe consistant en :
4-aminobutyraldéhyde diméthylacétal,
aminoacétaldéhyde diéthylacétal,
anilinoacétaldéhyde diéthylacétal,
N,N-diméthylformamide diméthylacétal,
N-benzylaminoacétaldéhyde diéthylacétal,
aminoacétaldéhyde diméthylacétal,
pyridine-4-carboxaldéhyde,
1-méthylpyrrole-2-carboxaldéhyde,
pyridine-2-carboxaldéhyde,
4-diméthylaminobenzaldéhyde,
4-diéthylaminobenzaldéhyde,
pyrrole-2-carboxaldéhyde,
2-chlorobenzaldéhyde thiosemicarbazone,
pyridine-3-carboxaldéhyde,
indole-3-carboxaldéhyde,
3,5-dinitrosalicylaldéhyde,
2-phénylindole-3-carboxaldéhyde,
4-diméthylamino-cinnamaldéhyde,
4-diméthylaminobutyraldéhyde diéthylacétal,
5-chloroindole-3-carboxaldéhyde,
indole-5-carboxaldéhyde,
1-méthylbenzimidazole-2-carboxaldéhyde,
2-(2,2,2-triméthylacétamido)pyridine-3-carboxaldéhyde,
2-amino-5-iodopyridine-3-carboxaldéhyde,
3-aminopyridine-4-carboxaldéhyde,
4-aminopyridine-3-carboxaldéhyde,
4-amino-5-iodopyridine-3-carboxaldéhyde,
2-chloro-4-iodopyridine-3-carboxaldéhyde,
5-bromo-2-méthoxypyridine-3-carboxaldéhyde,
2-méthoxypyridine-3-carboxaldéhyde,
2-éthoxypyridine-3-carboxaldéhyde,
2-isopropoxypyridine-3-carboxaldéhyde,
2-(cyclopropylméthoxy)pyridine-3-carboxaldéhyde,
2-chloropyridine-4-carboxaldéhyde,
2-n-propoxypyridine-3-carboxaldéhyde,
2-cyclopentyloxypyridine-3-carboxaldéhyde,
2-(2,2,2-trifluoroéthoxy)pyridine-3-carboxaldéhyde,
6-(1-pyrrolidino)pyridine-3-carboxaldéhyde,
6-(1-pipéridino)pyridine-3-carboxaldéhyde,
6-cyclopentyl-oxypyridine-3-carboxaldéhyde,
6-cyclohexyloxypyridine-3-carboxaldéhyde,
5-bromopyridine-2-carboxaldéhyde,
2-(3-diméthylaminopropoxy)benzaldéhyde,
1,3,5-triméthyl-1H-pyrazole-4-carboxaldéhyde,
5-benzyloxy-6-azaindole-3-carboxaldéhyde,
3-(p-tolyl)-1H-pyrazole-4-carboxaldéhyde,
N-méthylaminoacétaldéhyde diméthylacétal,
diméthylaminoacétaldéhyde diéthylacétal,
4-diéthylaminosalicylaldéhyde,
4-aminobutyraldéhyde diéthylacétal,
2-amino-5-chlorobenzaldéhyde,
2-bromopyridine-4-carboxaldéhyde,
2-aminopyridine-3-carboxaldéhyde,
4-diméthylaminobenzaldéhyde et des mélanges de ceux-ci.

11. Composition selon l'une quelconque des revendications 1-10, où le matériau formant un film polymère soluble dans l'eau présente la formule : 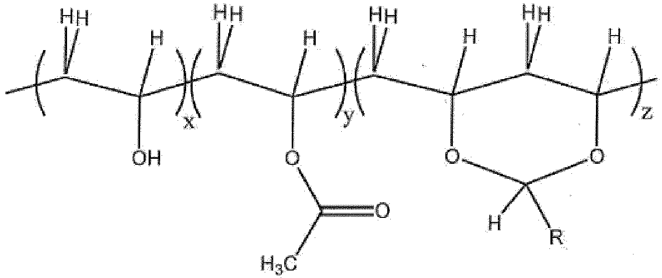 où le rapport moyen en nombre de z à x se trouve dans l'intervalle de 1:200 à 1:6, encore mieux de 1:100 à 1:8, bien mieux encore de 1:50 à 1:12, par exemple de 1:30 à 1:14, y est l'acétate résiduel restant de l'hydrolyse du composé parent, qui est de préférence dans l'intervalle de 1-20 %, encore mieux de 1-10 %, bien mieux encore de 1-5 % et R est un groupe dérivé chargé ou hydrophobe de préférence dérivé d'un groupe alkyle ou alcényle ayant de 3 à 22 atomes de carbone.
